# EUROPEAN PATENT APPLICATION

(11) **EP 4 113 388 A1**
(43) Date of publication of application: **04.01.2023**
(21) Application number: 22164372.9
(22) Date of filing: 25.03.2022
(51) Int. Cl.: G06N 3/063, G06N 3/02, G06N 3/04

(54) **METHOD OF OPTIMIZING NEURAL NETWORK MODEL AND NEURAL NETWORK MODEL PROCESSING SYSTEM PERFORMING THE SAME**

(30) Priority: 30.06.2021 KR 20210085534; 30.08.2021 KR 20210114779
(71) Applicant: Samsung Electronics Co., Ltd., Gyeonggi-do, 16677 (KR)
(72) Inventor: LEE, Changgwun, 16677 Suwon-si, Gyeonggi-do (KR); KIM, Kyoungyoung, 16677 Suwon-si, Gyeonggi-do (KR); KIM, Byeoungsu, 16677 Suwon-si, Gyeonggi-do (KR); KIM, Jaegon, 16677 Suwon-si, Gyeonggi-do (KR); YIM, Hangyoung, 16677 Suwon-si, Gyeonggi-do (KR); CHOI, Jungmin, 16677 Suwon-si, Gyeonggi-do (KR); HA, Sanghyuck, 16677 Suwon-si, Gyeonggi-do (KR)
(74) Representative: Kuhnen & Wacker Patent- und Rechtsanwaltsbüro PartG mbB

(57) **Abstract**

In a method of optimizing a neural network model, first model information about a first neural network model is received. Device information about a first target device that is used to execute the first neural network model is received. An analysis whether the first neural network model is suitable for executing on the first target device is performed, based on the first model information, the device information, and at least one of a plurality of suitability determination algorithms. A result of the analysis is output such that the first model information and the result of the analysis are displayed on a screen.

## Description

### CROSS-REFERENCE TO THE RELATED APPLICATION(S)

This application is based on and claims priority under 35 USC § 119 to Korean Patent Application No. 10-2021-0085534 filed on June 30, 2021 and to Korean Patent Application No. 10-2021-0114779 filed on August 30, 2021 in the Korean Intellectual Property Office (KIPO), the contents of which are herein incorporated by reference in their entireties.

### BACKGROUND

### 1. Field

Example embodiments relate generally to machine learning techniques, and more particularly to methods of optimizing neural network models, and neural network model processing systems performing the methods of optimizing the neural network models.

### 2. Description of the Related Art

There are various methods of classifying data based on machine learning. Among them is a method of classifying data using a neural network or an artificial neural network (ANN). The ANN may be obtained by engineering a cell structure model of a human brain where a process of efficiently recognizing a pattern is performed. The ANN refers to a calculation model that is based on software or hardware and is designed to imitate biological calculation abilities by applying many artificial neurons interconnected through connection lines. The human brain consists of neurons that are basic units of a nerve, and encrypts or decrypts information according to different types of dense connections between these neurons. Artificial neurons in the ANN are obtained through simplification of biological neuron functionality. The ANN performs a cognition or learning process by interconnecting the artificial neurons having connection intensities.

Recently, deep learning processes and services have been researched to overcome limitation of the ANN, and researches are conducting various research projects of analyzing and optimizing improving neural network models as the deep learning processes and services have been developed. Conventionally, optimization techniques using general-purpose algorithms have been used.

### SUMMARY

At least one example embodiment of the disclosure provides a method of efficiently optimizing a neural network model to be most appropriate or suitable for a target device.

At least one example embodiment of the disclosure provides a neural network model processing system that performs the method of optimizing the neural network model.

At least one example embodiment of the disclosure provides a method of efficiently operating the neural network model.

According to example embodiments, in a method of optimizing a neural network model, first model information about a first neural network model is received. Device information about a first target device used to execute the first neural network model is received. An analysis whether the first neural network model is suitable for executing on the first target device is performed, based on the first model information, the device information and at least one of a plurality of suitability determination algorithms. A result of the analysis is output such that the first model information and the result of the analysis are displayed on a screen.

According to example embodiments, a neural network model processing system includes an input device, a storage device, an output device and a processor. The input device receives first model information about a first neural network model and device information about a first target device used to execute the first neural network model. The storage device stores information about program routines. The program routines are configured to cause the processor to perform an analysis whether the first neural network model is suitable for executing on the first target device, based on the first model information, the device information and at least one of a plurality of suitability determination algorithms, and to generate a result of the analysis such that the first model information and the result of the analysis are displayed on a screen. The output device visually outputs the result of the analysis. The processor is connected to the input device, the storage device and the output device, and controls execution of the program routines.

According to example embodiments, in a method of optimizing a neural network model, a graphical user interface (GUI) for optimizing the neural network model is provided. First model information about a first neural network model that is to be optimized is received through the GUI. Device information about a first target device used to execute the first neural network model is received through the GUI. An analysis whether the first neural network model is suitable for executing on the first target device is performed, based on the first model information, the device information and at least one of a plurality of suitability determination algorithms. A result of the analysis is visually output on the GUI such that the first model information and the result of the analysis are displayed on one screen. A first user input for selecting a first layer from among layers of the first neural network model is received through the GUI based on the result of the analysis. The first layer is changed into a second layer based on the first user input. A result of changing the first layer into the second layer is visually output on the GUI. A second user input for selecting a third layer from among the layers of the first neural network model is received through the GUI. A quantization scheme of the third layer is changed based on the second user input. A result of changing the quantization scheme of the third layer is visually output on the GUI. When performing the analysis, performance scores of a structure and the layers of the first neural network model are obtained by performing a first analysis on the first neural network model based on a first algorithm. The first algorithm is used to determine performance efficiency of the structure and the layers of the first neural network model associated with the first target device. Complexity scores of the structure and the layers of the first neural network model are obtained by performing a second analysis on the first neural network model based on a second algorithm. The second algorithm is used to analyze complexity and capacity of the structure and the layers of the first neural network model. Memory footprint scores of the structure and the layers of the first neural network model are obtained by performing a third analysis on the first neural network model based on a third algorithm. The third algorithm is used to determine memory efficiency of the structure and the layers of the first neural network model associated with the first target device. Total scores of the first neural network model are obtained based on the performance scores, the complexity scores and the memory footprint scores.

According to example embodiments, in a method, a graphical user interface (GUI) is provided. First model information about a first neural network model is received. Device information about a first target device used to execute the first neural network model is received. An analysis whether the first neural network model is suitable for executing on the first target device is performed, based on the first model information, the device information and at least one of a plurality of suitability determination algorithms. A first graphical representation is displayed on the GUI such that the first model information and a result of the analysis are displayed on one screen. The first graphical representation includes the first model information and the result of the analysis. A second graphical representation is displayed on the GUI such that a result of changing at least one of the layers of the first neural network model based on the result of the analysis is displayed. The second graphical representation includes the process and the result of changing the at least one of the layers of the first neural network model.

### BRIEF DESCRIPTION OF THE DRAWINGS

Illustrative, non-limiting example embodiments will be more clearly understood from the following detailed description taken in conjunction with the accompanying drawings.
FIG. 1 is a flowchart illustrating a method of optimizing a neural network model according to example embodiments.
FIGS. 2, 3 and 4 are block diagrams illustrating a neural network model processing system according to example embodiments.
FIGS. 5A, 5B, 5C and 6 are diagrams for describing examples of a neural network model that is a target of a method of optimizing a neural network model according to example embodiments.
FIG. 7 is a flowchart illustrating an example of performing an analysis in FIG. 1.
FIG. 8 is a flowchart illustrating an example of performing a first analysis in FIG. 7.
FIG. 9 is a flowchart illustrating an example of performing an analysis in FIG. 1.
FIG. 10 is a flowchart illustrating an example of performing a second analysis in FIG. 9.
FIG. 11 is a flowchart illustrating an example of performing an analysis in FIG. 1.
FIGS. 12 and 13 are flowcharts illustrating examples of performing a third analysis in FIG. 11.
FIG. 14 is a flowchart illustrating an example of performing an analysis in FIG. 1.
FIG. 15 is a flowchart illustrating an example of a method of optimizing a neural network model of FIG. 1.
FIGS. 16A, 16B, 16C, 16D, 16E and 16F are diagrams for describing an operation of FIG. 15.
FIG. 17 is a flowchart illustrating a method of optimizing a neural network model according to example embodiments.
FIG. 18 is a flowchart illustrating an example of changing at least one of layers of a first neural network model in FIG. 17.
FIG. 19 is a flowchart illustrating an example of a method of optimizing a neural network model of FIG. 17.
FIGS. 20A, 20B, 20C and 20D are diagrams for describing an operation of FIG. 19.
FIG. 21 is a flowchart illustrating a method of optimizing a neural network model according to example embodiments.
FIG. 22 is a flowchart illustrating an example of applying different quantization schemes to at least some of layers of a first neural network model in FIG. 21.
FIG. 23 is a flowchart illustrating an example of a method of optimizing a neural network model of FIG. 21.
FIGS. 24A, 24B and 24C are diagrams for describing an operation of FIG. 23.
FIG. 25 is a block diagram illustrating a system that performs a method of optimizing a neural network model according to example embodiments.

### DETAILED DESCRIPTION

Various example embodiments will be described more fully with reference to the accompanying drawings, in which example embodiments are shown. The disclosure may, however, be embodied in many different forms and should not be construed as limited to the example embodiments set forth herein. Like reference numerals refer to like elements throughout this application.

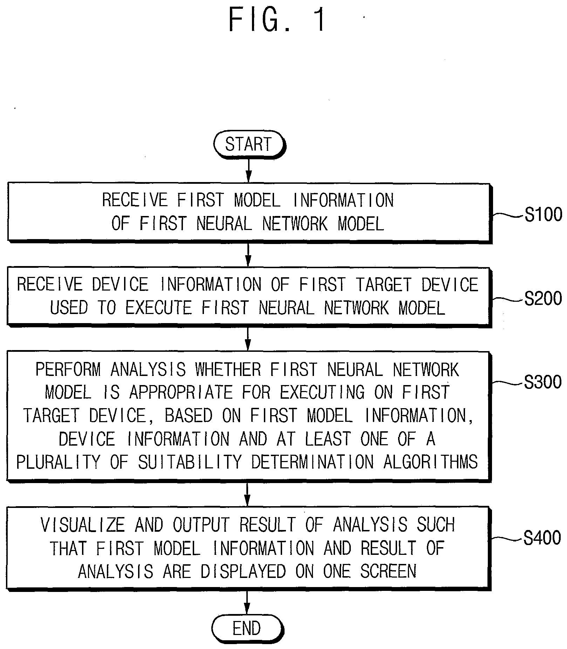

FIG. 1 is a flowchart illustrating a method of optimizing a neural network model according to example embodiments.

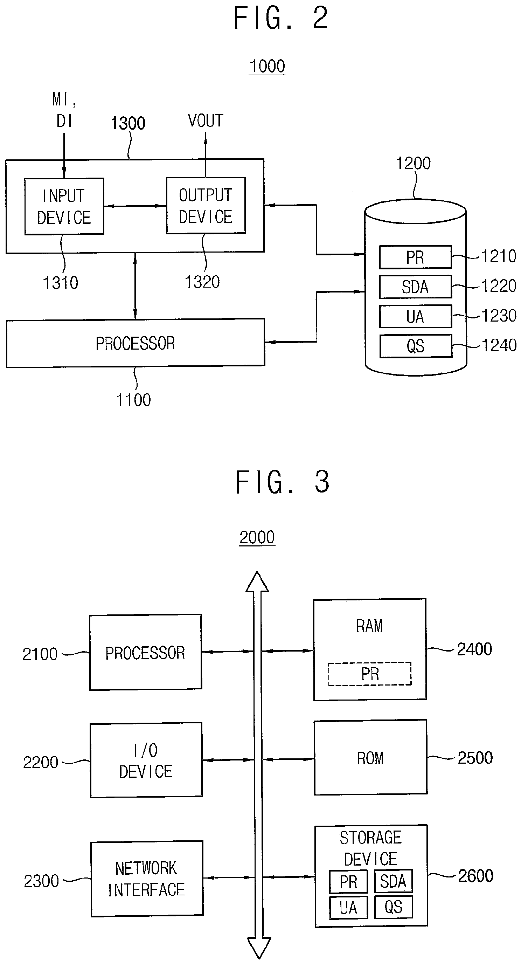

Referring to FIG. 1, a method of optimizing a neural network model according to example embodiments is performed and/or executed by a computer-based neural network model processing system in which at least some of components are implemented with hardware and/or software. A detailed configuration of the neural network model processing system will be described with reference to FIGS. 2, 3 and 4.

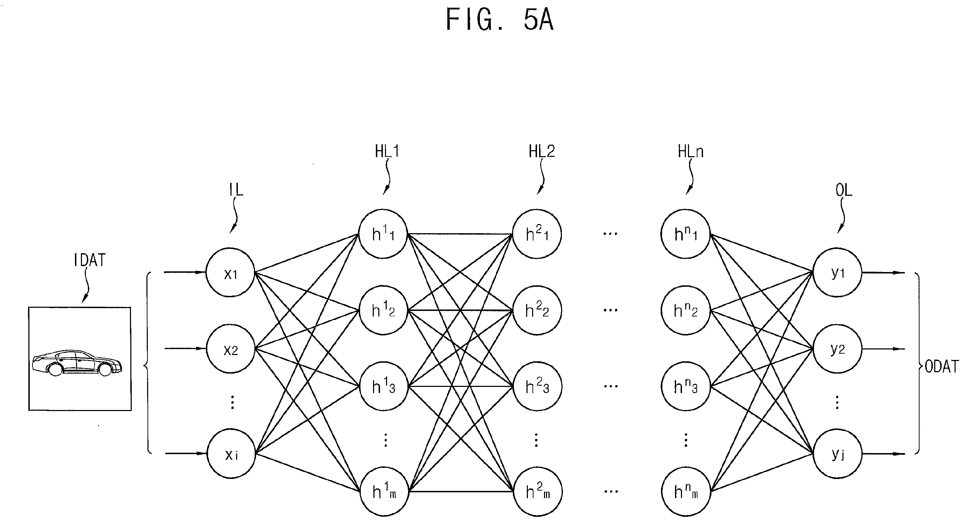

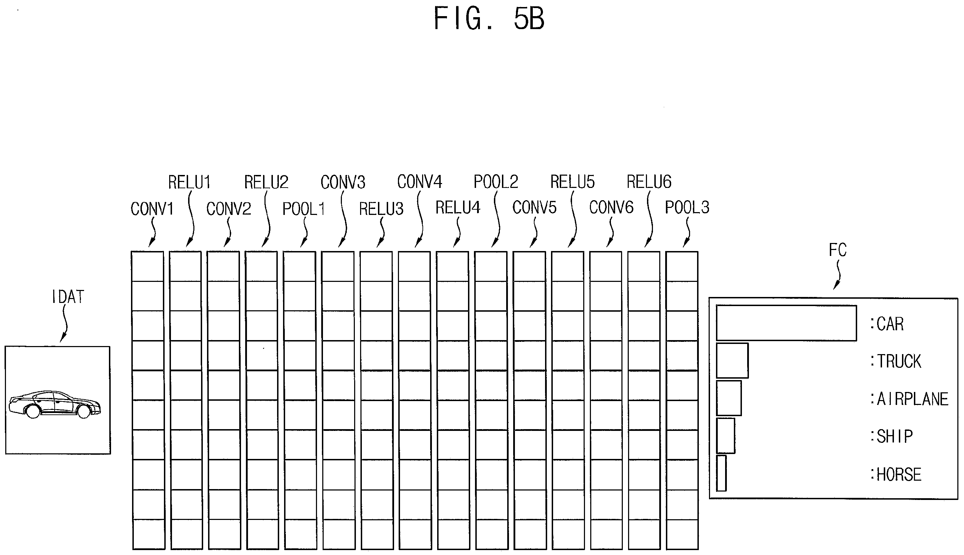

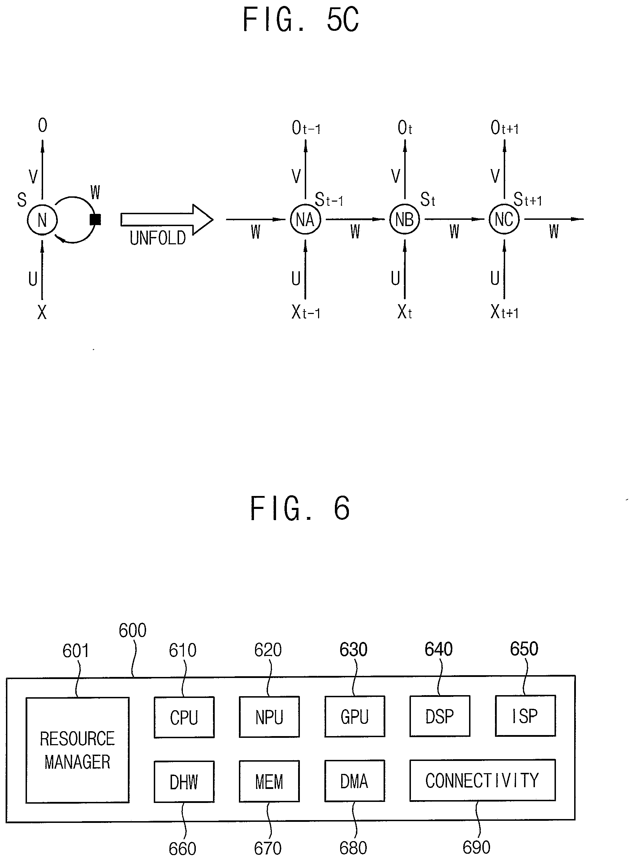

In the method of optimizing the neural network model according to example embodiments, first model information of a first neural network model is received (step S100). For example, the first neural network model may be a neural network model in which a training has been completed (e.g., a pre-trained neural network model), or may be a neural network model in which a training is being performed. In other words, the method of optimizing the neural network model according to example embodiments may be performed and/or executed after the training on the first neural network model is completed, or while the training on the first neural network model is performed. Examples of the neural network model will be described with reference to FIGS. 5A, 5B and 5C.

A training (or training operation) on a neural network model indicates a process of solving a task in an optimized manner when the task to be solved and a set of functions for the task are given, and indicates a process for improving or enhancing the performance and/or accuracy of the neural network model. For example, the training on the neural network model may include an operation of determining a network structure of the neural network model, an operation of determining parameters, such as weights, used in the neural network model, or the like. In addition, during the training on the neural network model, parameters other than an architecture and data type may be changed while the architecture and data type are maintained.

Device information of a first target device used to execute or drive the first neural network model is received (step S200). For example, the first target device may include a processing element that executes or drives the first neural network model, and/or a neural network system (or electronic system) that includes the processing element. An example of the neural network system will be described with reference to FIG. 6.

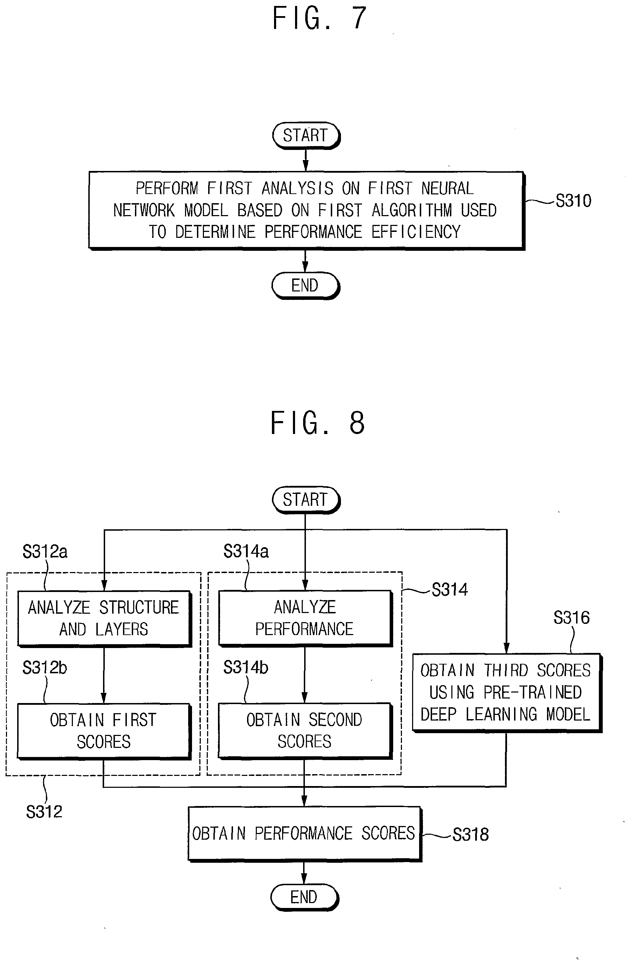

An analysis whether the first neural network model is appropriate for executing or driving on the first target device is performed, based on the first model information, the device information, and at least one of a plurality of suitability determination algorithms (step S300). For example, the plurality of suitability determination algorithms may include a first algorithm that is used to determine performance efficiency of the first neural network model, a second algorithm that is used to analyze complexity and capacity of the first neural network model, a third algorithm that is used to determine memory efficiency of the first neural network model, or the like. Examples of the plurality of suitability determination algorithms and the analysis in step S300 will be described with reference to FIGS. 7 through 14.

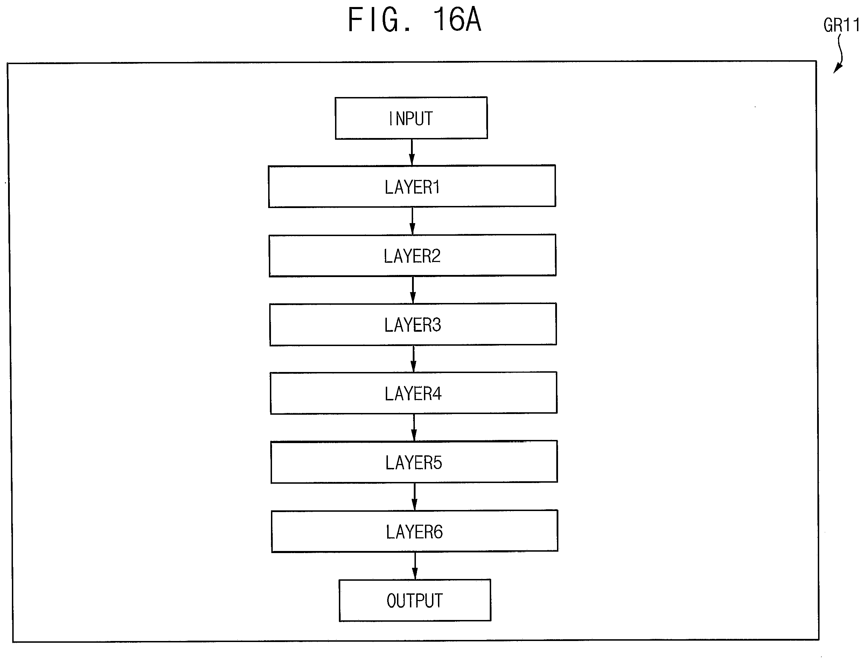

A result of the analysis is visualized and output such that the first model information and the result of the analysis are displayed on a screen (step S400). For example, step S400 may be performed using a graphical user interface (GUI). For example, the result of the analysis may be displayed based on at least one of scores and color, and a graphic representation including the first model information and the result of the analysis may be displayed on the GUI such that the first model information and the result of the analysis are displayed together. The GUI will be described with reference to FIGS. 16A, 16B, 16C, 16D, 16E, 16F, 20A, 20B, 20C, 20D, 24A, 24B and 24C.

In the method of optimizing the neural network model according to example embodiments, a neural network model determined to be most appropriate or suitable for a target device may be efficiently implemented. For example, before a training is performed on a neural network model, the neural network model optimized for the target device may be designed. After the training is completed on the neural network model, it may be checked and/or determined whether the neural network model is suitable for the target device, and if necessary, the neural network model may be modified and/or a new configuration that is more suitable may be suggested. In addition, optimized performance may be obtained by applying suitable quantization scheme to each component of the neural network model. Further, the GUI for such operations may be provided. Accordingly, a user may efficiently design and modify the neural network model to be most optimized for the target device, and may apply the suitable quantization scheme.

FIGS. 2, 3 and 4 are block diagrams illustrating a neural network model processing system according to example embodiments.

Referring to FIG. 2, a neural network model processing system 1000 is a computer-based neural network model processing system, and includes a processor 1100, a storage device 1200 and an input/output (I/O) device 1300. The I/O device 1300 includes an input device 1310 and an output device 1320.

The processor 1100 may be used to perform the method of optimizing the neural network model according to example embodiments. For example, the processor 1100 may include a microprocessor, an application processor (AP), a digital signal processor (DSP), a graphic processing unit (GPU), or the like. Although only one processor 1100 is illustrated in FIG. 2, example embodiments are not limited thereto. For example, a plurality of processors may be included in the neural network model processing system 1000. In addition, the processor 1100 may include cache memories to increase computation capacity.

The storage device 1200 may store and/or include a program (PR) 1210 for the method of optimizing the neural network model according to example embodiments. The storage device 1200 may further store and/or include suitability determination algorithms (SDA) 1220, updating algorithms (UA) 1230 and quantization schemes (QS) 1240 that are used to perform the method of optimizing the neural network model according to example embodiments. The program 1210, the suitability determination algorithms 1220, the updating algorithms 1230 and the quantization schemes 1240 may be provided from the storage device 1200 to the processor 1100.

In some example embodiments, the storage device 1200 may include at least one of various non-transitory computer-readable storage mediums used to provide commands and/or data to a computer. For example, the non-transitory computer-readable storage mediums may include a volatile memory such as a static random access memory (SRAM), a dynamic random access memory (DRAM), or the like, and/or a nonvolatile memory such as a flash memory, a magnetoresistive random access memory (MRAM), a phase-change random access memory (PRAM), a resistive random access memory (RRAM), or the like. The non-transitory computer-readable storage mediums may be inserted into the computer, may be integrated in the computer, or may be connected to the computer through a communication medium such as a network and/or a wireless link.

The input device 1310 may be used to receive an input for the method of optimizing the neural network model according to example embodiments. For example, the input device 1310 may receive model information MI and device information DI, and may further receive a user input. For example, the input device 1310 may include at least one of various input means, such as a keyboard, a keypad, a touch pad, a touch screen, a mouse, a remote controller, or the like.

The output device 1320 may be used to provide an output for the method of optimizing the neural network model according to example embodiments. For example, the output device 1320 may provide visualized output VOUT. For example, the output device 1320 may include an output means for displaying the visualized output VOUT, such as a display device, and may further include at least one of various output means, such as a speaker, a printer, or the like.

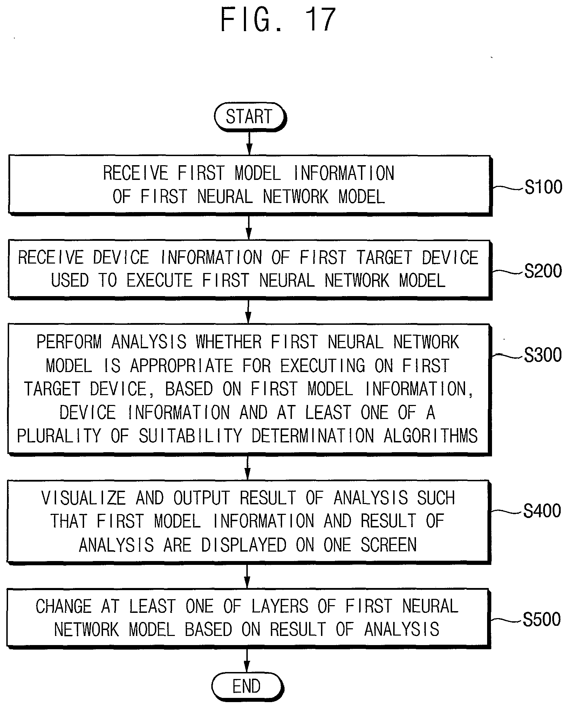

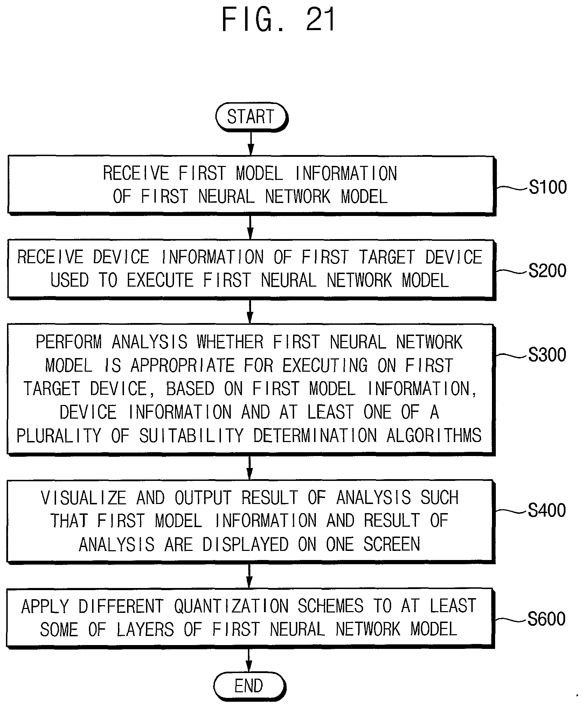

The neural network model processing system 1000 may perform the method of optimizing the neural network model according to example embodiments, which is described with reference to FIG. 1. For example, the input device 1310 may receive first model information (e.g., the model information MI) of a first neural network model and device information (e.g., the device information DI) of a first target device used to execute or drive the first neural network model. The storage device 1200 may store information of program routines, and the program routines may be configured to perform an analysis whether the first neural network model is appropriate for executing on the first target device, based on the first model information, the device information and at least one of a plurality of suitability determination algorithms, and to generate a result of the analysis such that the first model information and the result of the analysis are displayed on a screen. The output device 1320 may visualize and output the result of the analysis. The processor 1100 may be connected to the input device 1310, the storage device 1200 and the output device 1320, and may control execution of the program routines. In addition, the neural network model processing system 1000 may perform a method of optimizing a neural network model according to example embodiments, which will be described with reference to FIGS. 17 and 21.

Referring to FIG. 3, a neural network model processing system 2000 includes a processor 2100, an I/O device 2200, a network interface 2300, a random access memory (RAM) 2400, a read only memory (ROM) 2500 and a storage device 2600.

In some example embodiments, the neural network model processing system 2000 may be a computing system. For example, the computing system may be a fixed computing system such as a desktop computer, a workstation or a server, or may be a portable computing system such as a laptop computer.

The processor 2100 may be substantially the same as or similar to the processor 1100 in FIG. 2. For example, the processor 2100 may include a core or a processor core for executing an arbitrary instruction set (for example, intel architecture-32 (IA-32), 64 bit extension IA-32, x86-64, PowerPC, Sparc, MIPS, ARM, IA-64, etc.). For example, the processor 2100 may access a memory (e.g., the RAM 2400 or the ROM 2500) through a bus, and may execute instructions stored in the RAM 2400 or the ROM 2500. As illustrated in FIG. 3, the RAM 2400 may store a program PR for the method of optimizing the neural network model according to example embodiments or at least some elements of the program PR, and the program PR may allow the processor 2100 to perform operations of optimizing the neural network model.

In other words, the program PR may include a plurality of instructions and/or procedures executable by the processor 2100, and the plurality of instructions and/or procedures included in the program PR may allow the processor 2100 to perform the method of optimizing the neural network model according to example embodiments. Each of the procedures may denote a series of instructions for performing a certain task. A procedure may be referred to as a function, a routine, a subroutine, or a subprogram. Each of the procedures may process data provided from the outside and/or data generated by another procedure.

The storage device 2600 may be substantially the same as or similar to the storage device 1200 in FIG. 2. For example, the storage device 2600 may store the program PR, and may store suitability determination algorithms SDA, updating algorithms UA and quantization schemes QS. The program PR or at least some elements of the program PR may be loaded from the storage device 2600 to the RAM 2400 before being executed by the processor 2100. The storage device 2600 may store a file written in a program language, and the program PR generated by a compiler or at least some elements of the program PR may be loaded to the RAM 2400.

The storage device 2600 may store data, which is to be processed by the processor 2100, or data obtained through processing by the processor 2100. The processor 2100 may process the data stored in the storage device 2600 to generate new data, based on the program PR and may store the generated data in the storage device 2600.

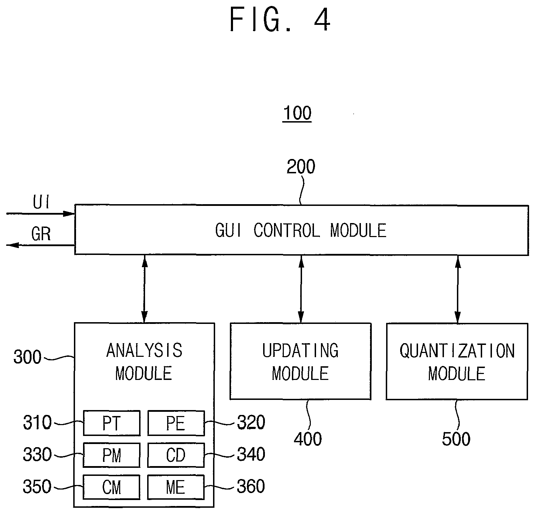

The I/O device 2200 may be substantially the same as or similar to the I/O device 1300 in FIG. 2. The I/O device 2200 may include an input device, such as a keyboard, a pointing device, or the like, and may include an output device such as a display device, a printer, or the like. For example, a user may trigger, through the I/O devices 2200, execution of the program PR by the processor 2100, may input the model information MI and the device information DI in FIG. 2 and/or a user input UI in FIG. 4, and may check the visualized output VOUT in FIG. 2 and/or a graphical representation GR in FIG. 4.

The network interface 2300 may provide access to a network outside the neural network model processing system 2000. For example, the network may include a plurality of computing systems and communication links, and the communication links may include wired links, optical links, wireless links, or arbitrary other type links. The model information MI and the device information DI in FIG. 2 and/or the user input UI in FIG. 4 may be provided to the neural network model processing system 2000 through the network interface 2300, and the visualized output VOUT in FIG. 2 and/or the graphical representation GR in FIG. 4 may be provided to another computing system through the network interface 2300.

Referring to FIG. 4, a neural network model optimizing module 100 may be executed and/or controlled by the neural network model processing systems 1000 and 2000 of FIGS. 2 and 3. The neural network model optimizing module 100 may include a GUI control module 200 and an analysis module 300, and may further include an updating module 400 and a quantization module 500. The neural network model optimizing module 100 may provide a GUI for optimizing a neural network model.

Herein, the term "module" may indicate, but is not limited to, a software and/or hardware component, such as a field programmable gate array (FPGA) or an application specific integrated circuit (ASIC), which performs certain tasks. A module may be configured to reside in a tangible addressable storage medium and be configured to execute on one or more processors. For example, a "module" may include components such as software components, object-oriented software components, class components and task components, and processes, functions, routines, segments of program code, drivers, firmware, microcode, circuitry, data, databases, data structures, tables, arrays, and variables. A "module" may be divided into a plurality of "modules" that perform detailed functions.

The analysis module 300 may perform an analysis (or analyzing operation) whether a neural network model is appropriate for executing on a target device, based on suitability determination algorithms (e.g., the suitability determination algorithms SDA in FIGS. 2 and 3).

The analysis module 300 may include a pre-listed table (PT) 310 for the target device, a performance estimator (PE) 320, a pre-trained deep learning model (PM) 330 for the target device, a complexity determining unit (CD) 340, a capacity measuring unit (CM) 350, and a memory estimator (ME) 360. Detailed operations associated with the analysis using each component will be described with reference to FIGS. 7 through 14.

The updating module 400 may perform an update (or updating algorithms) on the neural network model based on updating algorithms (e.g., the updating algorithms UA in FIGS. 2 and 3). For example, the update on the neural network model may include a setting change, a layer change, or the like. Detailed operations associated with the update will be described with reference to FIG. 17.

The quantization module 500 may perform a quantization (or quantizing operation) on the neural network model based on quantization schemes (e.g., the quantization schemes QS in FIGS. 2 and 3). Detailed operations associated with the quantization will be described with reference to FIG. 21.

The GUI control module 200 may control a GUI to perform an optimization on the neural network model. For example, the GUI control module 200 may control the GUI to receive a user input UI and to output a graphical representation GR. For example, the user input UI may include the model information MI and the device information DI in FIG. 2, and the graphical representation GR may correspond to the visualized output VOUT in FIG. 2.

In some example embodiments, at least some elements of the neural network model optimizing module 100 may be implemented as instruction codes or program routines (e.g., a software program). For example, the instruction codes or the program routines may be executed by a computer-based electronic system, and may be stored in any storage device located inside or outside the computer-based electronic system. In other example embodiments, at least some elements of the neural network model optimizing module 100 may be implemented as hardware. For example, at least some elements of the neural network model optimizing module 100 may be included in a computer-based electronic system.

FIGS. 5A, 5B, 5C and 6 are diagrams for describing examples of a neural network model that is a target of a method of optimizing a neural network model according to example embodiments.

FIGS. 5A, 5B and 5C illustrate examples of a network structure of a neural network model, and FIG. 6 illustrates an example of a neural network system that is used to execute and/or drive the neural network model. For example, the neural network model may include at least one of an artificial neural network (ANN) model, a convolutional neural network (CNN) model, a recurrent neural network (RNN) model, a deep neural network (DNN) model, or the like. However, example embodiments are not limited thereto. For another example, the neural network model may include a variety of learning models, such as deconvolutional neural networks, stacked neural networks (SNN), state-space dynamic neural networks (SSDNN), deep belief networks (DBN), generative adversarial networks (GAN), and/or restricted Boltzmann machines (RBM). Alternatively or additionally, the neural network model may include other forms of machine learning models, such as, for example, linear and/or logistic regression, statistical clustering, Bayesian classification, decision trees, dimensionality reduction such as principal component analysis, and expert systems; and/or combinations thereof, including ensembles such as random forests.

Referring to FIG. 5A, a general neural network may include an input layer IL, a plurality of hidden layers HL1, HL2, ..., HLn and an output layer OL.

The input layer IL may include i input nodes x₁, x₂, ..., xᵢ, where i is a natural number. Input data (e.g., vector input data) IDAT whose length is i may be input to the input nodes x₁, x₂, ..., _{X}i such that each element of the input data IDAT is input to a respective one of the input nodes x₁, x₂, ..., xᵢ.

The plurality of hidden layers HL1, HL2, ..., HLn may include n hidden layers, where n is a natural number, and may include a plurality of hidden nodes h¹₁, h¹₂, h¹₃, ..., h¹ₘ, h²₁, h²₂, h²₃, ..., h²ₘ, hⁿ₁, hⁿ₂, hⁿ₃, ..., hⁿₘ. For example, the hidden layer HL1 may include m hidden nodes h¹₁, h¹₂, h¹₃, ..., h¹ₘ, the hidden layer HL2 may include m hidden nodes h²₁, h²₂, h²₃, ..., h²ₘ, and the hidden layer HLn may include m hidden nodes hⁿ₁, hⁿ₂, hⁿ₃, ..., hⁿₘ, where m is a natural number.

The output layer OL may include j output nodes y₁, y₂, ..., yⱼ, where j is a natural number. Each of the output nodes y₁, y₂, ..., yⱼ may correspond to a respective one of classes to be categorized. The output layer OL may generate output values (e.g., class scores or numerical output such as a regression variable) and/or output data ODAT associated with the input data IDAT for each of the classes. In some example embodiments, the output layer OL may be a fully-connected layer and may indicate, for example, a probability that the input data IDAT corresponds to a car.

A structure of the neural network illustrated in FIG. 5A may be represented by information on branches (or connections) between nodes illustrated as lines, and a weighted value assigned to each branch, which is not illustrated. In some neural network models, nodes within one layer may not be connected to one another, but nodes of different layers may be fully or partially connected to one another. In some other neural network models, such as unrestricted Boltzmann machines, at least some nodes within one layer may also be connected to other nodes within one layer in addition to (or alternatively with) one or more nodes of other layers.

Each node (e.g., the node h¹₁) may receive an output of a previous node (e.g., the node x₁), may perform a computing operation, computation or calculation on the received output, and may output a result of the computing operation, computation or calculation as an output to a next node (e.g., the node h²₁). Each node may calculate a value to be output by applying the input to a specific function, e.g., a nonlinear function.

In some example embodiments, the structure of the neural network is set in advance, and the weighted values for the connections between the nodes are set appropriately by using data having an already known answer of which class the data belongs to (sometimes referred to as a "label"). The data with the already known answer is sometimes referred to as "training data", and a process of determining the weighted value is sometimes referred to as "training". The neural network "learns" to associate the data with corresponding labels during the training process. A group of an independently trainable structure and the weighted value is sometimes referred to as a "model", and a process of predicting, by the model with the determined weighted value, which class input data belongs to, and then outputting the predicted value, is sometimes referred to as a "testing" process.

The general neural network illustrated in FIG. 5A may not be suitable for handling input image data (or input sound data) because each node (e.g., the node h¹₁) is connected to all nodes of a previous layer (e.g., the nodes x₁, x₂, ..., xᵢ included in the layer IL) and then the number of weighted values drastically increases as the size of the input image data increases. Thus, a CNN, which is implemented by combining the filtering technique with the general neural network, has been researched such that a two-dimensional image, as an example of the input image data, is efficiently trained by the CNN.

Referring to FIG. 5B, a CNN may include a plurality of layers CONV1, RELU1, CONV2, RELU2, POOL1, CONV3, RELU3, CONV4, RELU4, POOL2, CONV5, RELU5, CONV6, RELU6, POOL3 and FC. Here, CONV is a convolution layer, RELU is a Rectified Linear Unit, POOL is a pooling layer and FC is a fully connected layer.

Unlike the general neural network, each layer of the CNN may have three dimensions of a width, a height and a depth, and thus data that is input to each layer may be volume data having three dimensions of a width, a height and a depth. For example, if an input image in FIG. 5B has a size of 32 widths (e.g., 32 pixels) and 32 heights and three color channels R, G and B, input data IDAT corresponding to the input image may have a size of 32^{∗}32^{∗}3. The input data IDAT in FIG. 5B may be referred to as input volume data or input activation volume.

Each of the convolutional layers CONV1, CONV2, CONV3, CONV4, CONV5 and CONV6 may perform a convolutional operation on input volume data. In an image processing, the convolutional operation indicates an operation in which image data is processed based on a mask with weighted values and an output value is obtained by multiplying input values by the weighted values and adding up the total multiplication results. The mask may be referred to as a filter, a window or a kernel.

Parameters of each convolutional layer may include a set of learnable filters. Every filter may be small spatially (along a width and a height), but may extend through the full depth of an input volume. For example, during the forward pass, each filter may be slid (e.g., convolved) across the width and height of the input volume, and dot products may be computed between the entries of the filter and the input at any position. As the filter is slid over the width and height of the input volume, a two-dimensional activation map corresponding to responses of that filter at every spatial position may be generated. As a result, an output volume may be generated by stacking these activation maps along the depth dimension. For example, if input volume data having a size of 32^{∗}32^{∗}3 passes through the convolutional layer CONV1 having four filters with zero-padding, output volume data of the convolutional layer CONV1 may have a size of 32^{∗}32^{∗}12 (e.g., a depth of volume data increases).

Each of the RELU layers RELU1, RELU2, RELU3, RELU4, RELU5 and RELU6 may perform a rectified linear unit (RELU) operation that corresponds to an activation function defined by, e.g., a function f(x) = max(0, x) (e.g., an output is zero for all negative input x). For example, if input volume data having a size of 32^{∗}32^{∗}12 passes through the RELU layer RELU1 to perform the rectified linear unit operation, output volume data of the RELU layer RELU1 may have a size of 32^{∗}32^{∗}12 (e.g., a size of volume data is maintained).

Each of the pooling layers POOL1, POOL2 and POOL3 may perform a down-sampling operation on input volume data along spatial dimensions of width and height. For example, four input values arranged in a 2^{∗}2 matrix formation may be converted into one output value based on a 2^{∗}2 filter. For example, a maximum value of four input values arranged in a 2^{∗}2 matrix formation may be selected based on 2^{∗}2 maximum pooling, or an average value of four input values arranged in a 2^{∗}2 matrix formation may be obtained based on 2^{∗}2 average pooling. For example, if input volume data having a size of 32^{∗}32^{∗}12 passes through the pooling layer POOL1 having a 2^{∗}2 filter, output volume data of the pooling layer POOL1 may have a size of 16^{∗}16^{∗}12 (e.g., a width and a height of volume data decreases, and a depth of volume data is maintained).

Typically, one convolutional layer (e.g., CONV1) and one RELU layer (e.g., RELU1) may form a pair of CONV/RELU layers in the CNN, pairs of the CONV/RELU layers may be repeatedly arranged in the CNN, and the pooling layer may be periodically inserted in the CNN, thereby reducing a spatial size of image and extracting a characteristic of image.

The output layer or fully-connected layer FC may output results (e.g., class scores) of the input volume data IDAT for each of the classes. For example, the input volume data IDAT corresponding to the two-dimensional image may be converted into a onedimensional matrix or vector as the convolutional operation and the down-sampling operation are repeated. For example, the fully-connected layer FC may indicate probabilities that the input volume data IDAT corresponds to a car, a truck, an airplane, a ship and a horse.

The types and number of layers included in the CNN may not be limited to an example described with reference to FIG. 5B and may be changed according to example embodiments. In addition, although not illustrated in FIG. 5B, the CNN may further include other layers such as a softmax layer for converting score values corresponding to predicted results into probability values, a bias adding layer for adding at least one bias, or the like.

Referring to FIG. 5C, a RNN may include a repeating structure using a specific node or cell N illustrated on the left side of FIG. 5C.

A structure illustrated on the right side of FIG. 5C may indicate that a recurrent connection of the RNN illustrated on the left side is unfolded (or unrolled). The term "unfolded" means that the network is written out or illustrated for the complete or entire sequence including all nodes NA, NB and NC. For example, if the sequence of interest is a sentence of 3 words, the RNN may be unfolded into a 3-layer neural network, one layer for each word (e.g., without recurrent connections or without cycles).

In the RNN in FIG. 5C, X indicates an input of the RNN. For example, Xt may be an input at time step t, and Xt-i and Xₜ₊₁ may be inputs at time steps t-1 and t+1, respectively.

In the RNN in FIG. 5C, S indicates a hidden state. For example, St may be a hidden state at the time step t, and St-i and St+i may be hidden states at the time steps t-1 and t+1, respectively. The hidden state may be calculated based on a previous hidden state and an input at a current step. For example, St=f(UXt+WSt-i). For example, the function f may be generally a nonlinearity function such as tanh or RELU. S₋₁, which is required to calculate a first hidden state, may be typically initialized to all zeroes.

In the RNN in FIG. 5C, O indicates an output of the RNN. For example, Ot may be an output at the time step t, and Oₜ₋₁ and Ot+i may be outputs at the time steps t-1 and t+1, respectively. For example, if it is required to predict a next word in a sentence, it would be a vector of probabilities across a vocabulary. For example, Ot=softmax(VSt).

In the RNN in FIG. 5C, the hidden state may be a "memory" of the network. For example, the RNN may have a "memory" which captures information about what has been calculated so far. The hidden state St may capture information about what happened in all the previous time steps. The output Ot may be calculated solely based on the memory at the current time step t. In addition, unlike a traditional neural network, which uses different parameters at each layer, the RNN may share the same parameters (e.g., U, V and W in FIG. 5C) across all time steps. This may indicate the fact that the same task may be performed at each step, only with different inputs. This may greatly reduce the total number of parameters required to be trained or learned.

Referring to FIG. 6, a neural network system 600 may include a plurality of heterogeneous resources for executing and/or driving a neural network model, and a resource manager 601 for managing and/or controlling the plurality of heterogeneous resources.

The plurality of heterogeneous resources may include a central processing unit (CPU) 610, a neural processing unit (NPU) 620, a graphic processing unit (GPU) 630, a digital signal processor (DSP) 640 and an image signal processor (ISP) 650, and may further include a dedicated hardware (DHW) 660, a memory (MEM) 670, a direct memory access unit (DMA) 680 and a connectivity 690. The CPU 610, the NPU 620, the GPU 630, the DSP 640, the ISP 650 and the dedicated hardware 660 may be referred to as processors, processing units (PE), computing resources, etc. The DMA 680 and the connectivity 690 may be referred to as communication resources.

The CPU 610, the NPU 620, the GPU 630, the DSP 640, the ISP 650 and the dedicated hardware 660 may perform various computational functions such as particular calculations and tasks, and may be used to execute a neural network model. For example, the dedicated hardware 660 may include a vision processing unit (VPU), a vision intellectual property (VIP), etc. The memory 670 may operate as a working memory or a data storage for data processed by the plurality of heterogeneous resources, and may store data associated with the neural network model. The DMA 680 may control an access to the memory 670. For example, the DMA 680 may include a memory DMA (MDMA), a peripheral DMA (PDMA), a remote DMA (RDMA), a smart DMA (SDMA), etc. The connectivity 690 may perform wire/wireless communication with an internal element and/or an external device. For example, the connectivity 690 may include an internal bus that supports an internal communication such as a system bus, peripheral component interconnect (PCI), PCI express (PCIe), etc., and/or may support an external communication such as a mobile telecommunication, universal serial bus (USB), Ethernet, WiFi, Bluetooth, near field communication (NFC), radio frequency identification (RFID), etc.

Although not illustrates in FIG. 6, the computing resources may further include a microprocessor, an application processor (AP), a customized hardware, a compression hardware, etc., and the communication resources may further include memory copy capable resources, etc.

In some example embodiments, the neural network system 600 may be included in any computing device and/or mobile device.

In some example embodiments, at least one of various services and/or applications, e.g., a computer vision (e.g., image classifying, image detection, image segmentation, image tracking, etc.) service, a user authentication service based on bioinformation or biometric data, an advanced driver assistance system (ADAS) service, a voice assistant service, an automatic speech recognition (ASR) service, or the like, may be performed, executed and/or processed by the neural network model described with reference to FIGS. 5A, 5B and 5C and the neural network system 600 described with reference to FIG. 6.

FIG. 7 is a flowchart illustrating an example of performing an analysis in FIG. 1.

Referring to FIGS. 1 and 7, when performing the analysis whether the first neural network model is appropriate for executing on the first target device (step S300), the plurality of suitability determination algorithms that are used to perform the analysis may include a first algorithm that is used to determine performance efficiency of a structure and layers of the first neural network model associated with the first target device, and a first analysis may be performed on the first neural network model based on the first algorithm (step S310). For example, step S310 may be performed by the analysis module 300 in FIG. 4.

As described with reference to FIGS. 5A, 5B and 5C, the first neural network model may include a plurality of layers having various characteristics, and may have a structure (or network structure) in which several layers are grouped together. Among the structure and the layers of the first neural network model, a structure, layer and/or element that are not appropriate or suitable for an operation of the first target device may exist. In step S310, it may be determined or checked whether the structure and layers of the first neural network model are efficient for the first target device, and a result of the determination may be scored and visually displayed in step S400.

FIG. 8 is a flowchart illustrating an example of performing a first analysis in FIG. 7.

Referring to FIGS. 7 and 8, when performing the first analysis on the first neural network model based on the first algorithm (step S310), first scores of the structure and the layers of the first neural network model may be obtained using a pre-listed table (e.g., the pre-listed table 310 in FIG. 4) for the first target device (step S312).

For example, it may be analyzed whether the structure and the layers of the first neural network model are efficient for the first target device based on the pre-listed table 310 (step S312a), and the first scores may be obtained based on a result of step S312a (step S312b). For example, the pre-listed table 310 used in step S312a may be a table or list in which structures and layers that are efficient and/or inefficient for inference in the first target device are pre-defined. For example, the pre-listed table 310 may be included in the model information (e.g., the model information MI in FIG. 2), and may be received with the model information MI. For example, the scoring in step S312b may be performed based on the order of efficiency, and a higher score may be given for a structure or layer having higher efficiency and a lower score may be given for a structure or layer having lower efficiency.

In addition, second scores of the structure and the layers of the first neural network model may be obtained by predicting processing time of the structure and the layers of the first neural network model using a performance estimator (e.g., the performance estimator 320 in FIG. 4) (step S314).

For example, the performance of the structure and the layers of the first neural network model may be analyzed using the performance estimator 320 (step S314a), and the second scores may be obtained based on a result of step S314a (step S314b). For example, the performance estimator 320 used in step S314a may be a tool for estimating the processing time of the neural network model, and may be implemented in the form of software and/or hardware. For example, the scoring in step S314b may be performed such that a structure and/or layer that drop the performance are represented, and a higher score may be given for a structure or layer having higher performance and a lower score may be given for a structure or layer having lower performance.

Further, third scores of the structure and the layers of the first neural network model may be obtained using a pre-trained deep learning model (e.g., the pre-trained deep learning model 330 in FIG. 4) for the first target device (step S316).

For example, the pre-trained deep learning model 330 used in step S316 may be a model that is trained using different components depending on the first target device. For example, the pre-trained deep learning model 330 may be included in the model information MI, and may be received with the model information MI. For example, the scoring in step S316 may be performed based on a determination output of the pre-trained deep learning model 330.

In other words, in step S312, the structures and/or layers of the models that are efficient and/or inefficient for the inference in the first target device may be pre-defined, the inefficient layer may be detected using the pre-listed table 310, and a defined solution may be provided. In step S314, each component may be simulated using the tool for estimating the processing time, and the performance of each component may be predicted and scored. In step S316, the deep learning model may be pre-trained by recording the performance obtained by executing several models having various structures and layers on the first target device, and the performance and suitability of each component of the first neural network model may be measured using the pre-trained deep learning model.

Although FIG. 8 illustrates that steps S312, S314 and S316 are substantially simultaneously performed, example embodiments are not limited thereto, and steps S312, S314 and S316 may be sequentially performed or in any given order.

Performance scores of the structure and the layers of the first neural network model may be obtained based on the first scores, the second scores and the third scores (step S318). For example, the performance scores may be obtained based on a weight summing scheme in which the first, second and third scores are summed with different weights. For example, the weights may be differently set for each target device. For example, first, second and third weights for the first, second and third scores may be included in the model information MI, and may be received with the model information MI.

In some example embodiments, the first scores, the second scores, the third scores, and the performance scores may be obtained for each of the structure and the layers of the first neural network model.

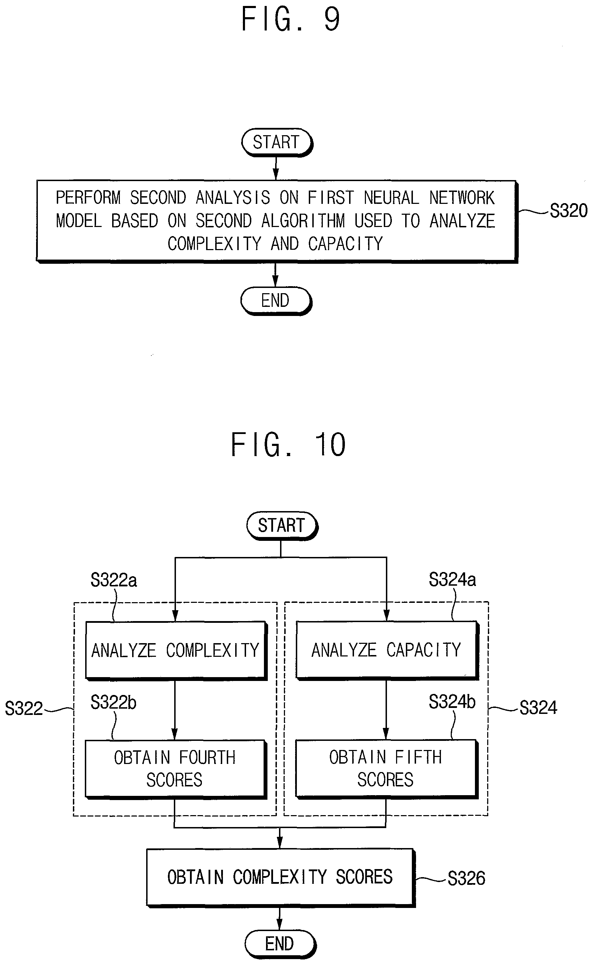

FIG. 9 is a flowchart illustrating an example of performing an analysis in FIG. 1.

Referring to FIGS. 1 and 9, when performing the analysis whether the first neural network model is appropriate for executing on the first target device (step S300), the plurality of suitability determination algorithms that are used to perform the analysis may include a second algorithm that is used to analyze complexity and capacity of the structure and the layers of the first neural network model, and a second analysis may be performed on the first neural network model based on the second algorithm (step S320). For example, step S320 may be performed by the analysis module 300 in FIG. 4.

In step S320, the optimization point may be determined and guided by analyzing the complexity and capacity of the structure and the layers of the first neural network model, and a result of the determination may be scored and visually displayed in step S400.

FIG. 10 is a flowchart illustrating an example of performing a second analysis in FIG. 9.

Referring to FIGS. 9 and 10, when performing the second analysis on the first neural network model based on the second algorithm (step S320), fourth scores of the structure and the layers of the first neural network model may be obtained by determining the complexity of the structure and the layers of the first neural network model (step S322).

For example, the complexity of the structure and the layers of the first neural network model may be analyzed by using a complexity determining unit (e.g., the complexity determining unit 340 in FIG. 4) (step S322a), and the fourth scores may be obtained based on a result of step S322a (step S322b). For example, the complexity determining unit 340 used in step S322a may be a tool for determining the complexity of the neural network model, and may be implemented in the form of software and/or hardware. For example, the scoring in step S322b may be performed based on a threshold of the complexity for the first target device, and a lower score may be given for a structure or layer having higher complexity and a higher score may be given for a structure or layer having lower complexity.

In some example embodiments, a criterion for determining the complexity by the complexity determining unit 340 may include the number of parameters, units and layers included in the neural network model. In some example embodiments, a scheme and/or algorithm for determining the complexity by the complexity determining unit 340 may include a complexity evaluation function, which is disclosed in the paper "On the Complexity of Neural Network Classifiers: A Comparison Between Shallow and Deep Architectures" by Monica Bianchini and Franco Scarselli. However, example embodiments are not limited thereto, and the complexity may be determined and/or checked using various criteria, schemes and/or algorithms.

In addition, fifth scores of the structure and the layers of the first neural network model may be obtained by measuring the capacity of the structure and the layers of the first neural network model (step S324).

For example, the capacity of the structure and the layers of the first neural network model may be analyzed by using a capacity measuring unit (e.g., the capacity measuring unit 350 in FIG. 4) (step S324a), and the fifth scores may be obtained based on a result of step S324a (step S324b). For example, the capacity measuring unit 350 used in step S324a may be a tool for measuring the capacity of the neural network model, and may be implemented in the form of software and/or hardware. For example, the scoring in step S324b may be performed depending on capacity requirements, and a higher score may be given for a structure or layer having larger capacity and a lower score may be given for a structure or layer having smaller capacity.

In some example embodiments, a scheme and/or algorithm for measuring the capacity by the capacity measuring unit 350 may include an algorithm, which is disclosed in the paper "Deep Neural Network Capacity" by Aosen Wang et al. However, example embodiments are not limited thereto, and the capacity may be measured using various criteria, schemes and/or algorithms.

In other words, in step S322, the degree of overhead in which the first neural network model is executed on the first target device may be measured using the algorithm for determining the complexity of the first neural network model, and the overhead of the first neural network model may be predicted by measuring the performance of the first target device depending on the complexity of the first neural network model. In step S324, the capacity of the first neural network model may be measured, the optimization point may be determined and guided using the capacity of the first neural network model, and it may be easier to optimize the first neural network model as the capacity of the first neural network model become large.

Although FIG. 10 illustrates that steps S322 and S324 are substantially simultaneously performed, example embodiments are not limited thereto, and steps S322 and S324 may be sequentially performed or in any given order.

Complexity scores of the structure and the layers of the first neural network model may be obtained based on the fourth scores and the fifth scores (step S326). For example, the complexity scores may be obtained based on a weight summing scheme in which the fourth and fifth scores are summed with different weights. For example, the weights may be differently set for each target device. For example, fourth and fifth weights for the fourth and fifth scores may be included in the model information MI, and may be received with the model information MI.

In some example embodiments, the fourth scores, the fifth scores, and the complexity scores may be obtained for each of the structure and the layers of the first neural network model.

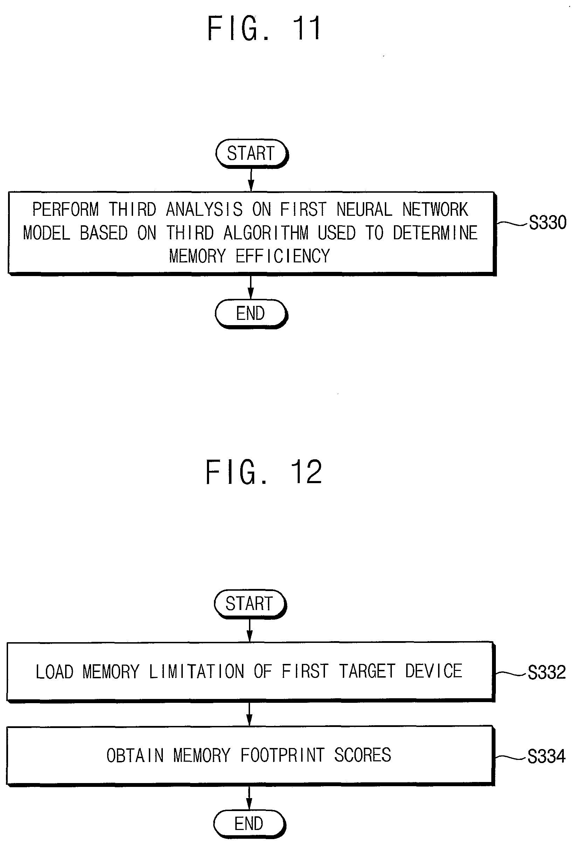

FIG. 11 is a flowchart illustrating an example of performing an analysis in FIG. 1.

Referring to FIGS. 1 and 11, when performing the analysis whether the first neural network model is appropriate for executing on the first target device (step S300), the plurality of suitability determination algorithms that are used to perform the analysis may include a third algorithm that is used to determine memory efficiency of the structure and the layers of the first neural network model associated with the first target device, and a third analysis may be performed on the first neural network model based on the third algorithm (step S330). For example, step S330 may be performed by the analysis module 300 in FIG. 4.

In step S330, the optimization point depending on the memory utilization may be determined and guided by analyzing the memory footprint of the structure and the layers of the first neural network model, and a result of the determination may be scored and visually displayed in step S400.

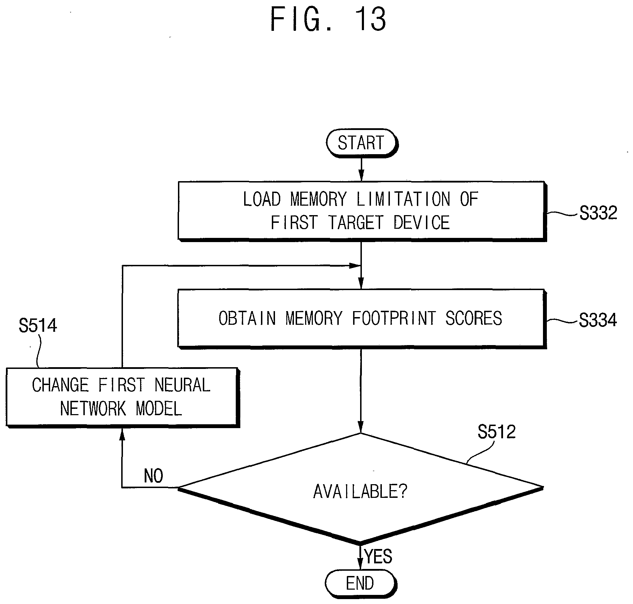

FIGS. 12 and 13 are flowcharts illustrating examples of performing a third analysis in FIG. 11.

Referring to FIGS. 11 and 12, when performing the third analysis on the first neural network model based on the third algorithm (step S330), memory limitation of the first target device may be loaded (step S332), and memory footprint scores of the structure and the layers of the first neural network model may be obtained based on the memory limitation of the first target device (step S334).

For example, due to the characteristic of the first target device, there may be the limitation of a memory such as an SRAM, a DRAM, or the like, and thus the performance of the first target device may vary depending on the limitation of the memory (e.g., read/write operations). The memory usage, bottleneck point, memory sharing, or the like, which may occur in each operation depending on the structure and/or type of the first neural network model, may be calculated in advance using a memory estimator (e.g., the memory estimator 360 in FIG. 4), and thus the optimized model may be designed based on the expected performance. For example, the memory estimator 360 used in step S334 may be a tool for analyzing the memory footprint of the neural network model, and may be implemented in the form of software and/or hardware.

In some example embodiments, the memory footprint scores may be obtained for each of the structure and the layers of the first neural network model.

Referring to FIGS. 11 and 13, when performing the third analysis on the first neural network model based on the third algorithm (step S330), steps S332 and S334 may be substantially the same as or similar to steps S332 and S334 in FIG. 12, respectively.

When the first neural network model is unavailable (or is not available) within the memory limitation (step S512: NO), the first neural network model may be changed, modified or updated (step S514). For example, the first neural network model may be changed depending on the memory usage, bottleneck point, memory sharing, or the like. Steps S512 and S514 may correspond to step S500 in FIG. 17, which will be described later.

When the first neural network model is available within the memory limitation (step S512: YES), the process may be terminated without changing the first neural network model.

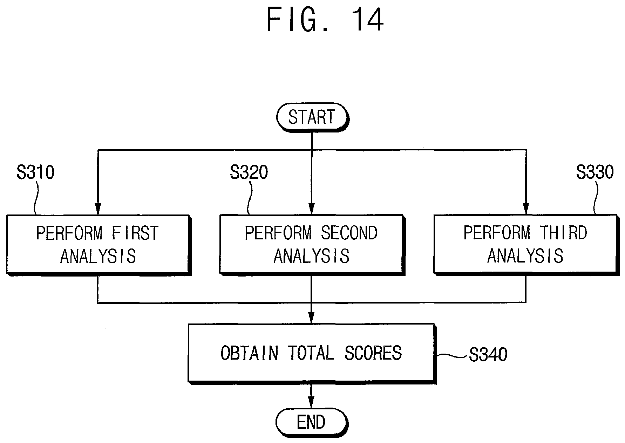

FIG. 14 is a flowchart illustrating an example of performing an analysis in FIG. 1.

Referring to FIGS. 1 and 14, when performing the analysis whether the first neural network model is appropriate for executing on the first target device (step S300), step S310 may be substantially the same as or similar to step S310 which is described with reference to FIGS. 7 and 8, step S320 may be substantially the same as or similar to step S320 which is described with reference to FIGS. 9 and 10, and step S330 may be substantially the same as or similar to step S330 which is described with reference to FIGS. 11, 12 and 13.

Total scores of the first neural network model may be obtained based on the performance scores obtained in step S310, the complexity scores obtained in step S320 and the memory footprint scores obtained in step S330 (step S340). For example, the total scores may be obtained based on a weight summing scheme in which the performance scores, the complexity scores and the memory footprint scores are summed with different weights. For example, the weights may be differently set for each target device. For example, the weights for the performance scores, the complexity scores and the memory footprint scores may be included in the model information MI, and may be received with the model information MI.

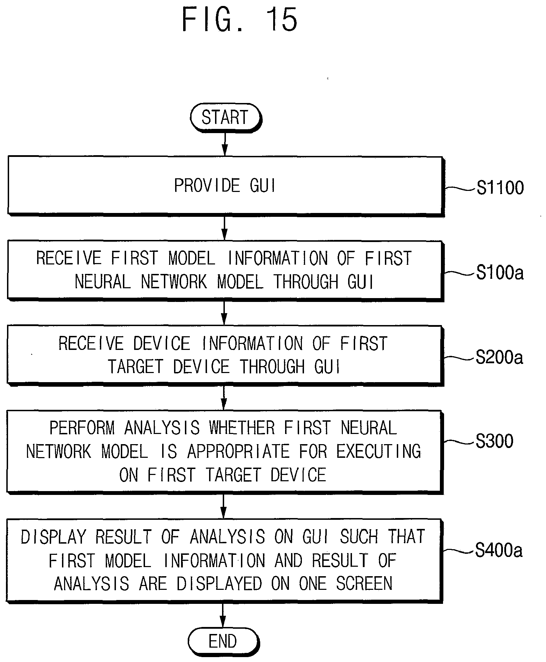

FIG. 15 is a flowchart illustrating an example of a method of optimizing a neural network model of FIG. 1. The descriptions repeated with FIG. 1 will be omitted.

Referring to FIG. 15, in the method of optimizing the neural network model according to example embodiments, a GUI for optimizing the neural network model is provided (step S1100). Detailed configurations of the GUI will be described later.

The first model information of the first neural network model is received through the GUI (step S100a). The device information of the first target device used to execute or drive the first neural network model is received through the GUI (step S200a). The analysis whether the first neural network model is appropriate for executing or driving on the first target device is performed, based on the first model information, the device information, and at least one of the plurality of suitability determination algorithms (step S300). The result of the analysis is displayed on the GUI such that the first model information and the result of the analysis are displayed on a screen (step S400a). Steps S100a, S200a and S400a may be similar to steps S100, S200 and S400 in FIG. 1, respectively, and step S300 may be substantially the same as or similar to step S300 in FIG. 1. For example, steps S300 and S400a may be performed by the analysis module 300 and the GUI control module 200 in FIG. 4.

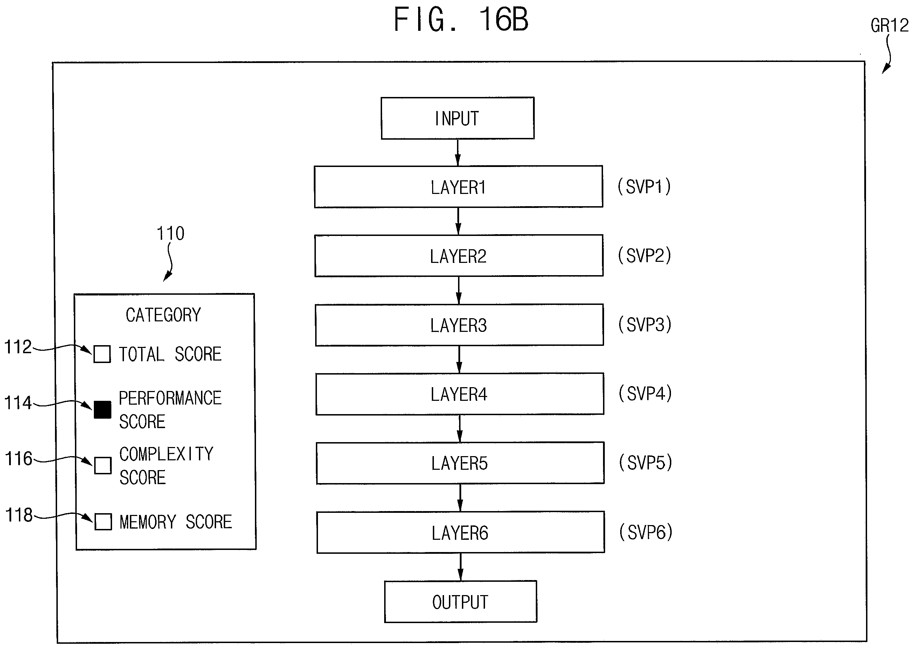

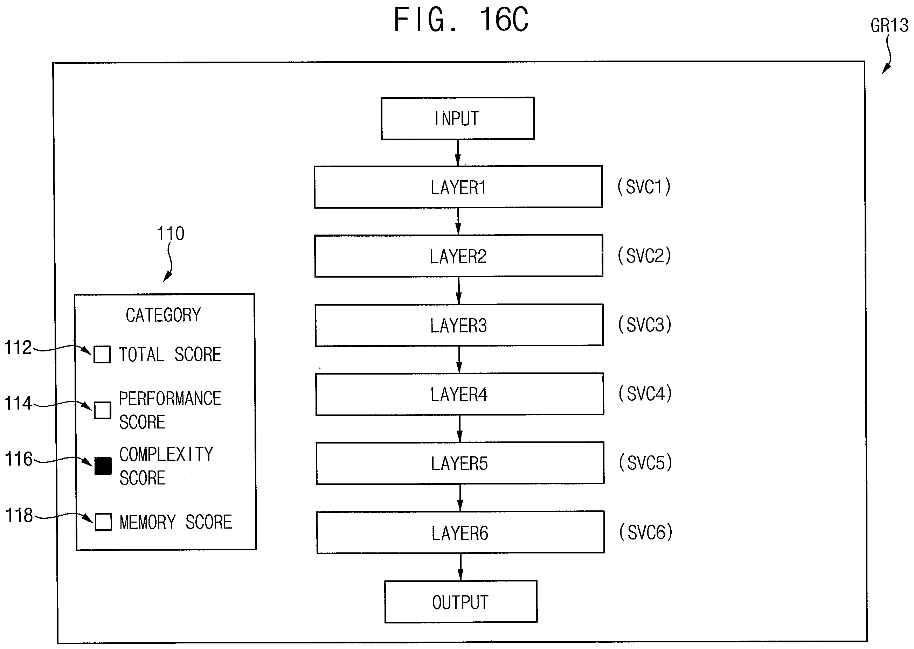

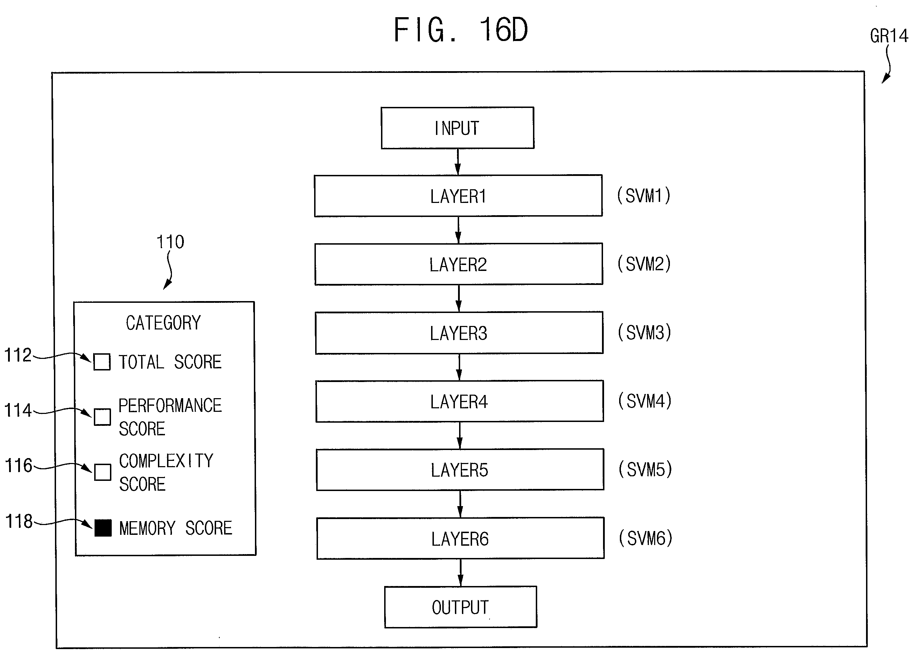

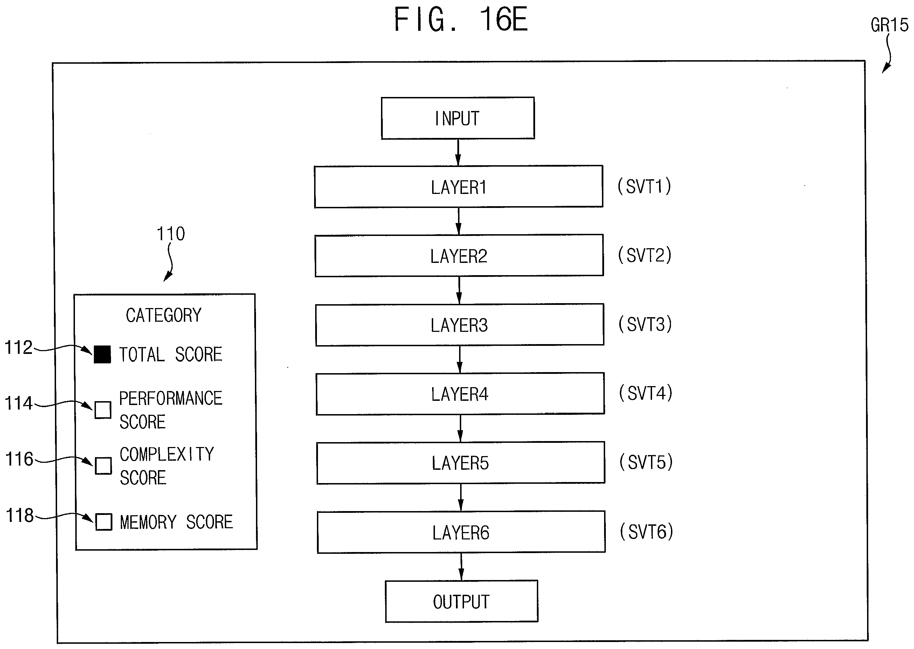

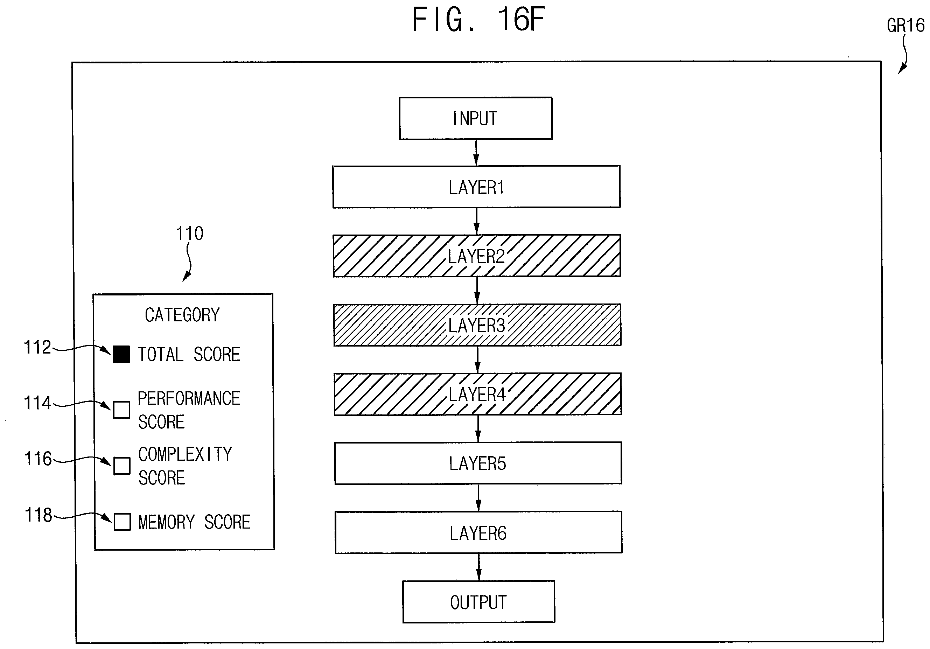

FIGS. 16A, 16B, 16C, 16D, 16E and 16F are diagrams for describing an operation of FIG. 15.

Referring to FIGS. 15 and 16A, in step S400a, a graphical representation GR11, which includes the structure and the layers of the first neural network model, may be displayed on the GUI at an initial operation time. For example, the graphical representation GR11 may include a network structure of a plurality of layers LAYER1, LAYER2, LAYER3, LAYER4, LAYER5 and LAYER6 between an input and an output of the first neural network model. For example, the graphical representation GR11 may include a plurality of layer boxes (e.g., rectangles) each of which corresponds to a respective one of the plurality of layers, and a plurality of arrows each of which indicates a connection between layers.

Referring to FIGS. 15, 16B, 16C, 16D, 16E and 16F, in step S400a, graphical representations GR12, GR13, GR14, GR15 and GR16, each of which includes the structure and the layers of the first neural network model and the result of the analysis together, may be displayed on the GUI. For example, the result of the analysis may be displayed based on selection of one of buttons 112, 114, 116 and 118 included in a menu 110 included in the graphical representations GR12, GR13, GR14, GR15 and GR16.

FIGS. 16B, 16C, 16D and 16E illustrate examples where the result of the analysis is displayed based on scores. In an example of FIG. 16B, the button 114 corresponding to the performance score may be selected, and the graphical representation GR12, which includes the plurality of layers LAYER1 to LAYER6 and a plurality of performance scores SVP1, SVP2, SVP3, SVP4, SVP5 and SVP6 obtained by step S310 as a result of the first analysis, may be displayed on the GUI. In an example of FIG. 16C, the button 116 corresponding to the complexity score may be selected, and the graphical representation GR13, which includes the plurality of layers LAYER1 to LAYER6 and a plurality of complexity scores SVC1, SVC2, SVC3, SVC4, SVC5 and SVC6 obtained by step S320 as a result of the second analysis, may be displayed on the GUI. In an example of FIG. 16D, the button 118 corresponding to the memory footprint score may be selected, and the graphical representation GR14, which includes the plurality of layers LAYER1 to LAYER6 and a plurality of memory footprint scores SVM1, SVM2, SVM3, SVM4, SVM5 and SVM6 obtained by step S330 as a result of the third analysis, may be displayed on the GUI. In an example of FIG. 16E, the button 112 corresponding to the total score based on the performance score, the complexity score, and the memory footprint score may be selected, and the graphical representation GR15, which includes the plurality of layers LAYER1 to LAYER6 and a plurality of total scores SVT1, SVT2, SVT3, SVT4, SVT5 and SVT6 obtained by step S340, may be displayed on the GUI.

In some example embodiments, the graphical representations GR12, GR13, GR14 and GR15 of FIGS. 16B, 16C, 16D and 16E may be switchable with each other.

FIG. 16F illustrates an example where the result of the analysis is displayed based on color. As with the example of FIG. 16E, the button 112 corresponding to the total score may be selected in an example of FIG. 16F, and the graphical representation GR16, which includes the plurality of layers LAYER1 to LAYER6 and some colored layer boxes, may be displayed on the GUI. For convenience of illustration, colors are indicated by hatching in FIG. 16F, and a layer box with higher hatching density may correspond to a layer box with darker color. For example, colored layers LAYER2 to LAYER4 may correspond to layers having relatively low total scores, a layer box with darker color may correspond to a layer having a lower total score, and thus the total score SVT3 corresponding to the layer LAYER3 may be the lowest total score. This is merely an example, and darker colors may be used to indicate a layer with a higher total score. Although not illustrated in detail, when one of the buttons 112, 114 and 116 is selected, the result of the analysis may be displayed based on color, as with the example of FIG. 16F.

However, example embodiments are not limited thereto, and graphical representations may be implemented using different shapes, or the like, as long as the graphical representations may indicate a layer having a lower score in a visually distinguishable manner from other layers.

In some example embodiments, one of the buttons 112, 114, 116 and 118 may be selected by receiving a user input using an input device 1310 such as, for example, a mouse or a touch screen included in the neural network model processing system 1000.

FIG. 17 is a flowchart illustrating a method of optimizing a neural network model according to example embodiments. The descriptions repeated with FIG. 1 will be omitted.

Referring to FIG. 17, in a method of optimizing a neural network model according to example embodiments, steps S100, S200, S300 and S400 may be substantially the same as or similar to steps S100, S200, S300 and S400 in FIG. 1, respectively.

At least one of the layers of the first neural network model is changed or modified based on the result of the analysis (step S500). For example, as with step S400, a result of the model change may be visualized and output in step S500, and S500 may be performed using the GUI. For example, step S500 may be performed by the updating module 400 in FIG. 4.

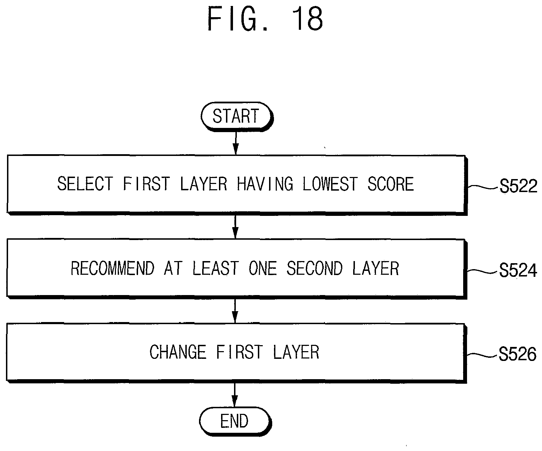

FIG. 18 is a flowchart illustrating an example of changing at least one of layers of a first neural network model in FIG. 17.

Referring to FIGS. 17 and 18, when changing the at least one of the layers of the first neural network model based on the result of the analysis (step S500), a first layer having the lowest score may be selected from among the layers of the first neural network model (step S522). At least one second layer that is capable of replacing the first layer and has a score higher than that of the first layer may be recommended (step S524). The first layer may be changed based on the at least one second layer (step S526). For example, steps S522 and S526 may be performed based on a user input (e.g., user input UI in FIG. 4). For example, the first layer may be changed into the second layer.

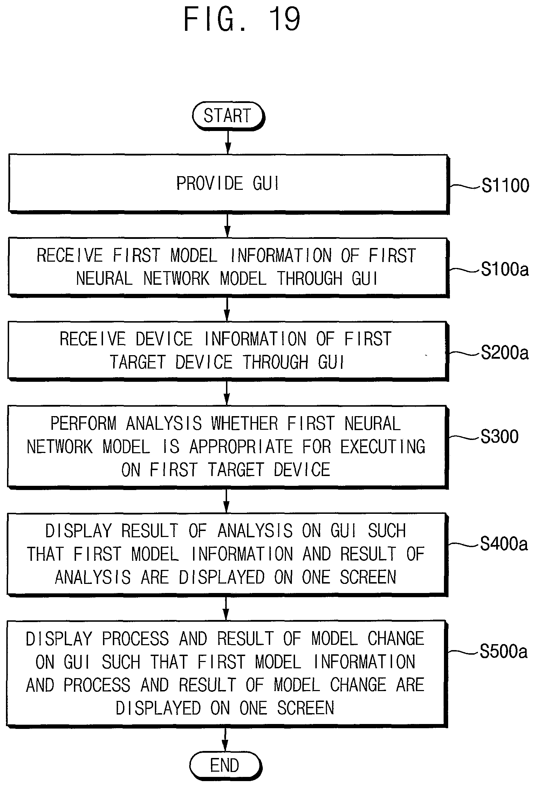

FIG. 19 is a flowchart illustrating an example of a method of optimizing a neural network model of FIG. 17. The descriptions repeated with FIGS. 15 and 17 will be omitted.

Referring to FIG. 19, in the method of optimizing the neural network model according to example embodiments, steps S1100, S100a, S200a, S300 and S400a may be substantially the same as or similar to steps S1100, S100a, S200a, S300 and S400a in FIG. 15, respectively.

The process and the result of the model change may be displayed on the GUI such that the first model information and the process and the result of the model change are displayed on a screen (step S500a). Step S500a may be similar to step S500 in FIG. 17. For example, step S500a may be performed by the updating module 400 and the GUI control module 200 in FIG. 4.

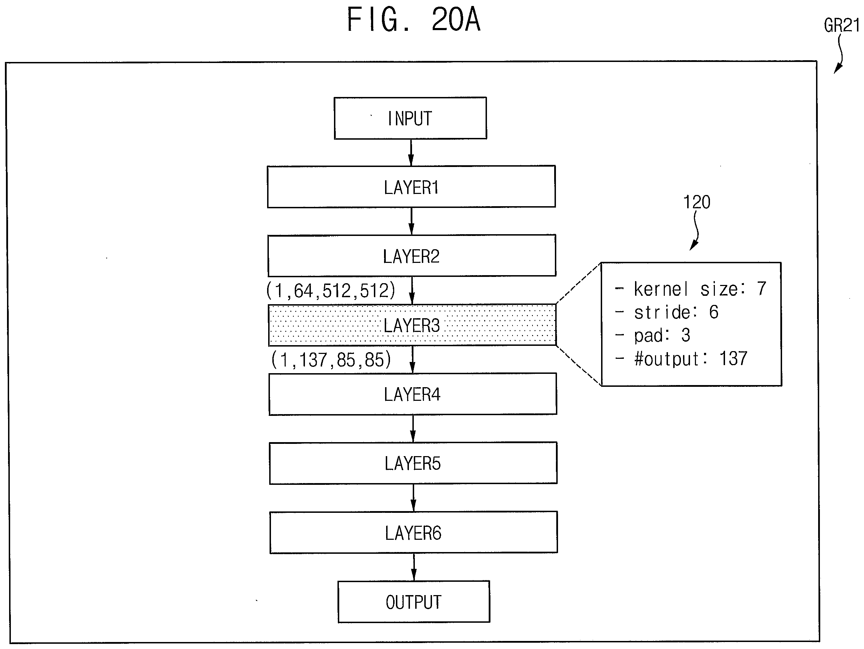

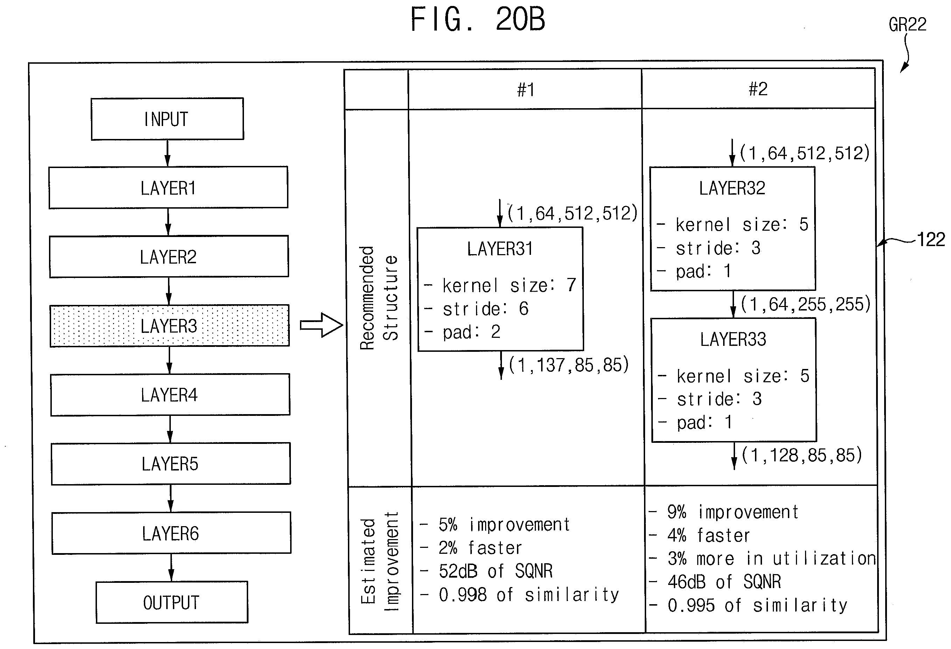

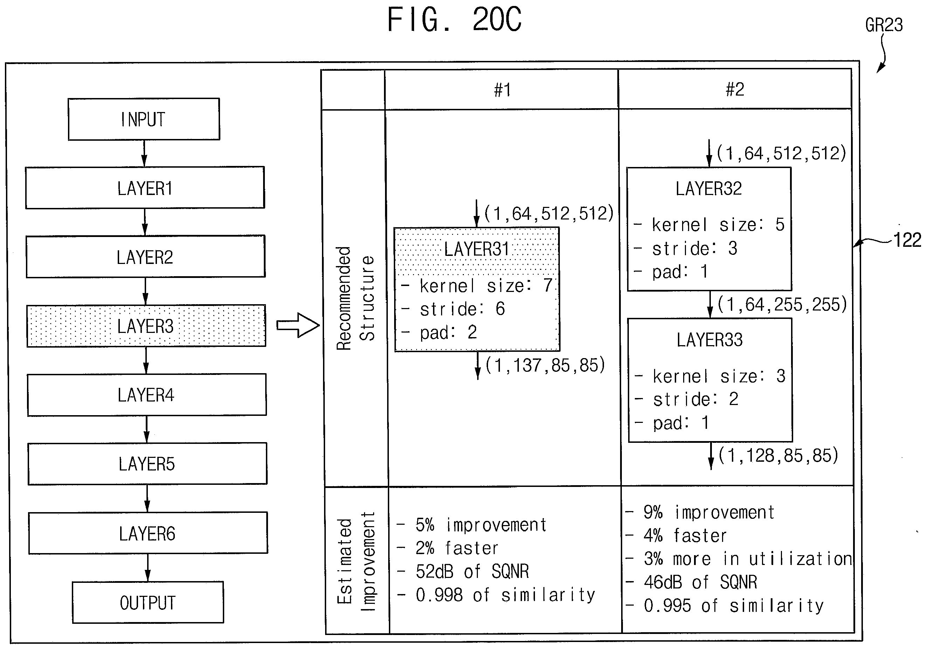

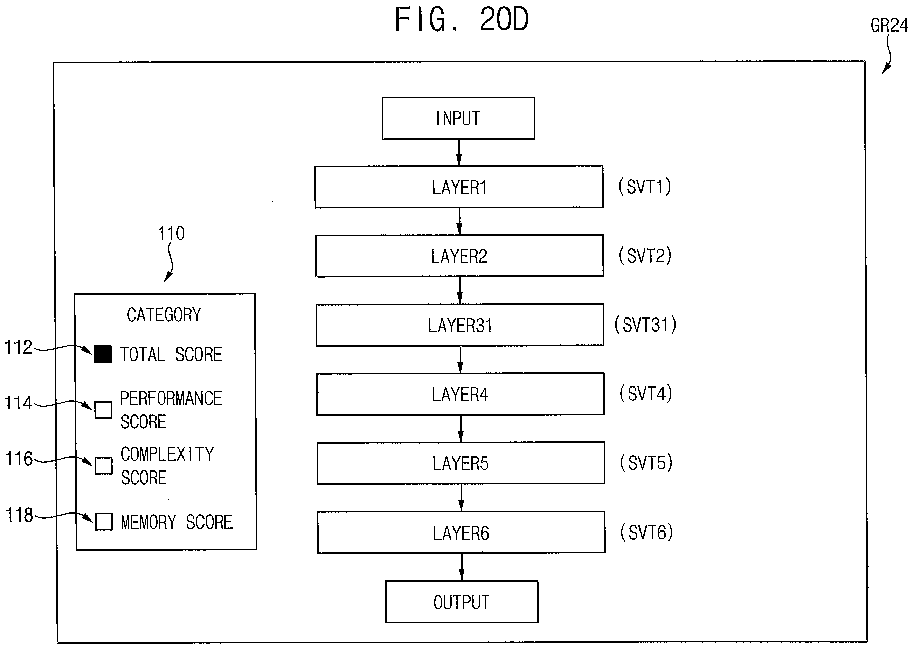

FIGS. 20A, 20B, 20C and 20D are diagrams for describing an operation of FIG. 19. The descriptions repeated with FIGS. 16A, 16B, 16C, 16D, 16E and 16F will be omitted.

Referring to FIGS. 16E, 16F, 19 and 20A, in step S500a, the layer LAYER3 having the lowest total score SVT3 may be selected from among the plurality of layers LAYER1 to LAYER6, and thus a graphical representation GR21, which includes information of the layer LAYER3 (on a menu 120), may be displayed on the GUI. For example, a size of an input data of the layer LAYER3 may be (1, 64, 512, 512), a size of an output data of the layer LAYER3 may be (1, 137, 85, 85), and the layer LAYER3 may be implemented based on configurations displayed on the menu 120.

Referring to FIGS. 19 and 20B, in step S500a, a graphical representation GR22, which includes information of recommended layers LAYER31, LAYER32 and LAYER33 that are capable of replacing a first layer LAYER3, may be displayed on the GUI. For example, a first recommended layer LAYER31 may be implemented with a single layer and based on configurations displayed on a menu 122. For example, second recommended layers LAYER32 and LAYER33 may be implemented with two layers and based on configurations displayed on the menu 122. For example, when the first layer LAYER3 is changed into the first recommended layer LAYER31, the similarity between the model before the change and the model after the change may be higher. For example, when the first layer LAYER3 is changed into the second recommended layers LAYER32 and LAYER33, the performance may be more improved.

Referring to FIGS. 19 and 20C, in step S500a, the first recommended layer LAYER31 may be selected to change the layer LAYER3 into the first recommended layer LAYER31, and a graphical representation GR23, which includes a graphical representation of an operation of selecting the first recommended layer LAYER31, may be displayed on the GUI.

Referring to FIGS. 19 and 20D, in step S500a, after the layer LAYER3 is changed into the first recommended layer LAYER31, a graphical representation GR24, which includes a plurality of layers LAYER1, LAYER2, LAYER31, LAYER4, LAYER5 and LAYER6 of the changed model and a plurality of total scores SVT1, SVT2, SVT31, SVT4, SVT5 and SVT6 of the changed model, may be displayed on the GUI. For example, the total score SVT31 of the changed layer LAYER31 may be higher than the total score SVT3 of the layer LAYER3 before the change.

In some example embodiments, the layer and corresponding layer box may be selected in FIGS. 20A and 20C by receiving a user input via the input device 1310, such as a mouse or a touch screen, included in the neural network model processing system 1000.

As described above, the neural network model may be changed or modified using the visual interface based on the suitability determination algorithm, and the neural network model optimized for the target device may be designed by repeating such modification process. From simple modifications to new alternative structures may be proposed, and both an automatic optimization function and a conditional optimization function based on a user's input condition may be provided.

FIG. 21 is a flowchart illustrating a method of optimizing a neural network model according to example embodiments. The descriptions repeated with FIG. 1 will be omitted.

Referring to FIG. 21, in a method of optimizing a neural network model according to example embodiments, steps S100, S200, S300 and S400 may be substantially the same as or similar to steps S100, S200, S300 and S400 in FIG. 1, respectively.

Different quantization schemes are applied to at least some of the layers of the first neural network model (step S600). For example, as with step S400, a result of the quantization scheme change may be visualized and output in step S600, and S600 may be performed using the GUI. For example, step S600 may be performed by the quantization module 500 in FIG. 4.

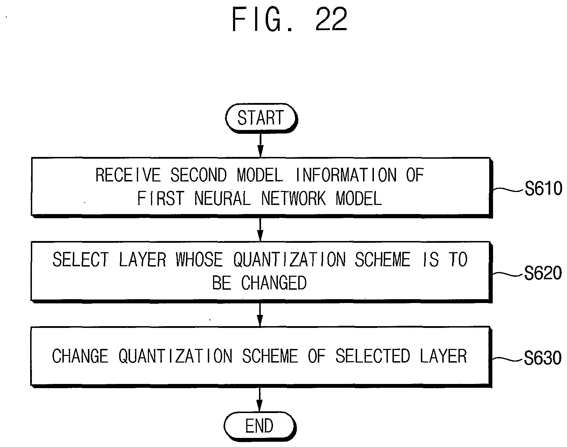

FIG. 22 is a flowchart illustrating an example of applying different quantization schemes to at least some of layers of a first neural network model in FIG. 21.

Referring to FIGS. 21 and 22, when applying the different quantization schemes to the at least some of the layers of the first neural network model (step S600), second model information of the first neural network model may be received (step S610). The second model information may be obtained after a training on the first neural network model is completed. A third layer whose quantization scheme is to be changed may be selected from among the layers of the first neural network model based on the second model information (step S620). The quantization scheme of the selected third layer may be changed (step S630). For example, steps S620 and S630 may be performed based on a user input (e.g., user input UI in FIG. 4).

Unlike steps S100, S200, S300 and S400, step S600 may be performed after the training on the first neural network model is completed. For example, the second model information may be obtained by changing at least a part of the first model information. For example, although not illustrated in detail, step S500 in FIG. 17 may be performed between steps S400 and S600 in FIG. 21 to obtain the second model information.

A quantization is a kind of a compression on a neural network model. A compression (or compressing operation) on a neural network model indicates a process for reducing the size and amount of computation of the neural network model while the performance and/or accuracy of the neural network model that is pre-trained are maintained as much as possible. A quantization (or quantizing operation) indicates a technique for reducing a size in which a neural network model is actually stored by decreasing weights, which are generally expressed in floating points, to the specific number of bits.

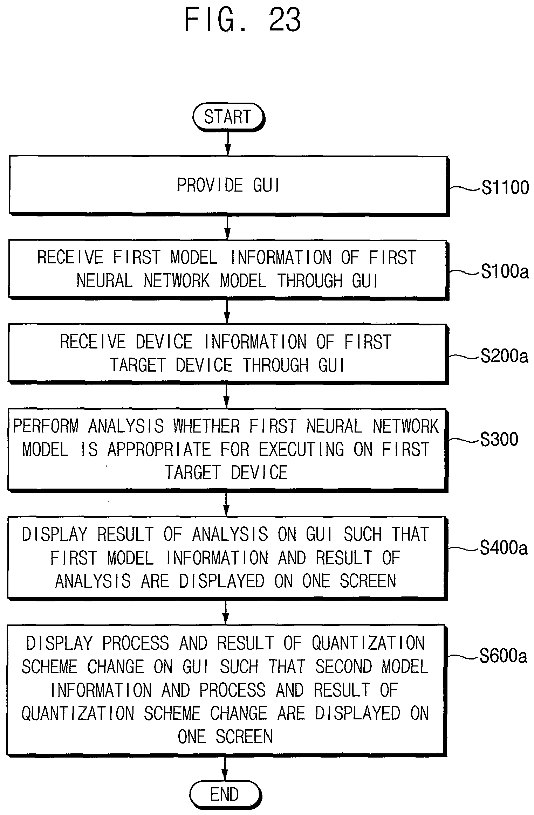

FIG. 23 is a flowchart illustrating an example of a method of optimizing a neural network model of FIG. 21. The descriptions repeated with FIGS. 15 and 21 will be omitted.

Referring to FIG. 23, in the method of optimizing the neural network model according to example embodiments, steps S1100, S100a, S200a, S300 and S400a may be substantially the same as or similar to steps S1100, S100a, S200a, S300 and S400a in FIG. 15, respectively.

The process and the result of the quantization scheme change may be displayed on the GUI such that the second model information and the process and the result of the quantization scheme change are displayed on a screen (step S600a). Step S600a may be similar to step S600 in FIG. 21. For example, step S600a may be performed by the quantization module 500 and the GUI control module 200 in FIG. 4.

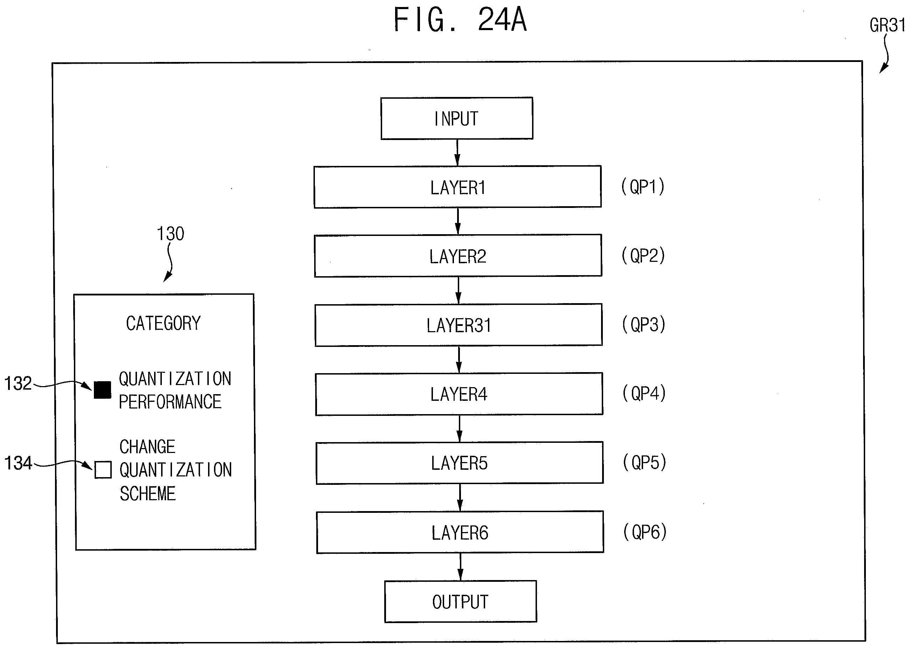

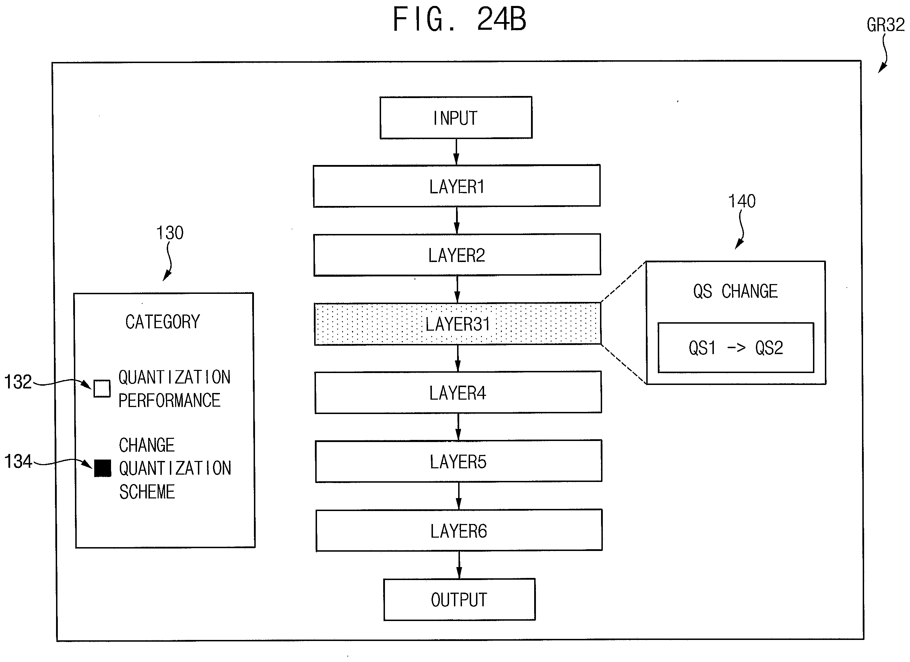

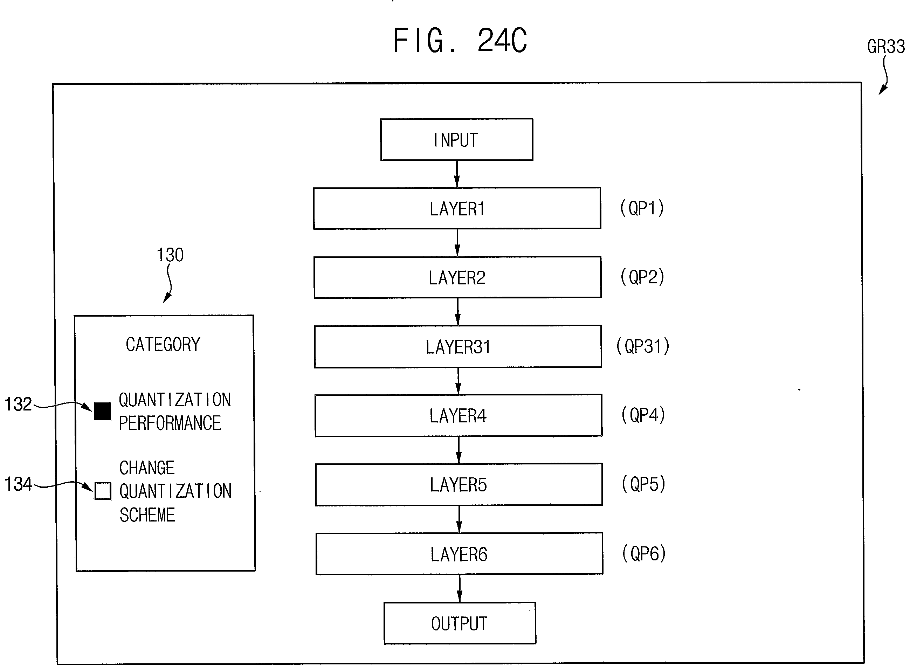

FIGS. 24A, 24B and 24C are diagrams for describing an operation of FIG. 23. The descriptions repeated with FIGS. 16A, 16B, 16C, 16D, 16E, 16F, 20A, 20B, 20C and 20D will be omitted.

Referring to FIGS. 23 and 24A, in step S600a, a button 132 corresponding to quantization performance included in a menu 130 may be selected, and a graphical representation GR31, which includes a plurality of layers LAYER1, LAYER2, LAYER31, LAYER4, LAYER5 and LAYER6 and a plurality of quantization performances QP1, QP2, QP3, QP4, QP5 and QP6, may be displayed on the GUI.

Referring to FIGS. 23 and 24B, in step S600a, a button 134 corresponding to a change of a quantization scheme included in the menu 130 may be selected, the layer LAYER31 whose quantization scheme is to be changed may be selected, the quantization scheme of the layer LAYER31 may be changed from a first quantization scheme QS1 into a second quantization scheme QS2, and a graphical representation GR32, which includes graphical representations corresponding to operations of selecting the layer LAYER31 and changing the quantization scheme of the layer LAYER31, may be displayed on the GUI. The layer LAYER31 may be re-quantized based on the second quantization scheme QS2, and the quantization scheme applied to the layer LAYER31 may be different from the quantization scheme applied to the other layers.

Referring to FIGS. 23 and 24C, in step S600a, the button 132 included in the menu 130 may be selected, and a graphical representation GR33, which includes a plurality of layers LAYER1, LAYER2, LAYER31, LAYER4, LAYER5 and LAYER6 and a plurality of quantization performances QP1, QP2, QP31, QP4, QP5 and QP6, may be displayed on the GUI. For example, the quantization performance QP31 of the layer LAYER31 based on the second quantization scheme QS2 may be higher than the quantization performance QP3 of the layer LAYER31 based on the first quantization scheme QS1.

As described above, the accuracy of the quantization scheme applied to each component may be checked, and the accuracy may be improved by applying different quantization schemes to components depending on the loss rate by the degree of distribution restoration. For example, an algorithm to detect a suitable quantization scheme for each layer and feature map depending the degree of loss may be provided by comparing the quantization accuracy of layers and feature maps of the floating point model. An optimized quantization performance may be obtained by applying different quantization schemes to each component and checking a result immediately. A user may arbitrarily set the target minimum/maximum range for one or multiple components, may set the quantization distribution mode, and may perform a re-quantization by differently applying an asymmetric scheme, a symmetric scheme, or the like, and/or by applying different bit-widths.

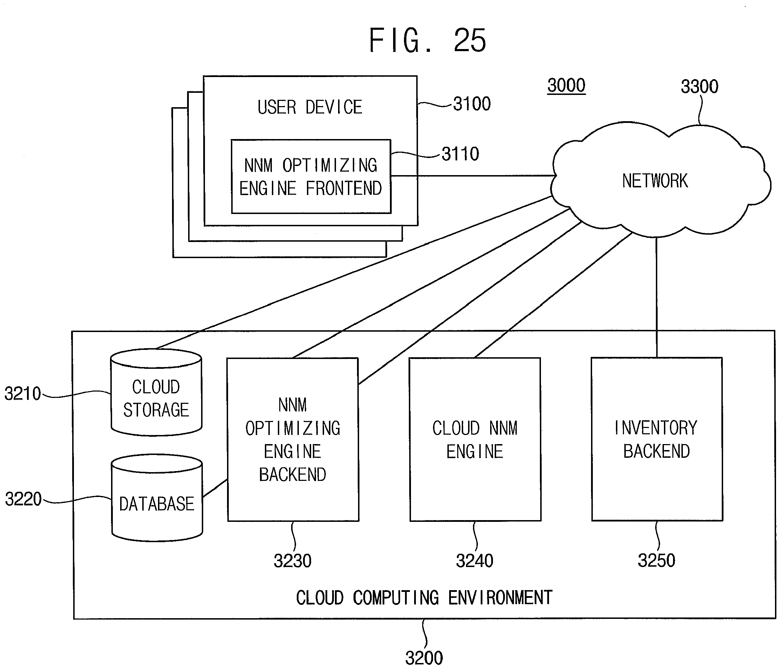

FIG. 25 is a block diagram illustrating a system that performs a method of optimizing a neural network model according to example embodiments.

Referring to FIG. 25, a system 3000 may include a user device 3100, a cloud computing environment 3200 and a network 3300. The user device 3100 may include a neural network model (NNM) optimizing engine frontend 3110. The cloud computing environment 3200 may include a cloud storage 3210, a database 3220, an NNM optimizing engine backend 3230, a cloud NNM engine 3240 and an inventory backend 3250. The method of optimizing the neural network model according to example embodiments may be implemented on a cloud environment, and may be performed by the NNM optimizing engine frontend 3110 and/or the NNM optimizing engine backend 3230.

The inventive concept may be applied to various electronic devices and systems that include the deep learning, ANN and/or machine learning systems. For example, the inventive concept may be applied to systems such as a personal computer (PC), a server computer, a data center, a workstation, a mobile phone, a smart phone, a tablet computer, a laptop computer, a personal digital assistant (PDA), a portable multimedia player (PMP), a digital camera, a portable game console, a music player, a camcorder, a video player, a navigation device, a wearable device, an internet of things (IoT) device, an internet of everything (IoE) device, an e-book reader, a virtual reality (VR) device, an augmented reality (AR) device, a robotic device, a drone, etc.

In the method of optimizing the neural network model and the neural network model processing system according to example embodiments, a neural network model to be most appropriate or suitable for a target device may be efficiently implemented. For example, before a training is performed on a neural network model, the neural network model optimized for the target device may be designed. After the training is completed on the neural network model, it may be checked and/or determined whether the neural network model is suitable for the target device, and if necessary, the neural network model may be modified and/or a new configuration that is more suitable may be suggested. In addition, optimized performance may be obtained by applying suitable quantization scheme to each component of the neural network model. Further, the GUI for such operations may be provided. Accordingly, a user may efficiently design and modify the neural network model to be most optimized for the target device, and may apply the suitable quantization scheme.

At least one of the components, elements, modules or units (collectively "components" in this paragraph) represented by a block in the drawings may be embodied as various numbers of hardware, software and/or firmware structures that execute respective functions described above, according to an example embodiment. According to example embodiments, at least one of these components may use a direct circuit structure, such as a memory, a processor, a logic circuit, a look-up table, etc. that may execute the respective functions through controls of one or more microprocessors or other control apparatuses. Also, at least one of these components may be specifically embodied by a module, a program, or a part of code, which contains one or more executable instructions for performing specified logic functions, and executed by one or more microprocessors or other control apparatuses. Further, at least one of these components may include or may be implemented by a processor such as a central processing unit (CPU) that performs the respective functions, a microprocessor, or the like. Two or more of these components may be combined into one single component which performs all operations or functions of the combined two or more components. Also, at least part of functions of at least one of these components may be performed by another of these components. Functional aspects of the above exemplary embodiments may be implemented in algorithms that execute on one or more processors. Furthermore, the components represented by a block or processing steps may employ any number of related art techniques for electronics configuration, signal processing and/or control, data processing and the like.

The foregoing is illustrative of example embodiments and is not to be construed as limiting thereof. Although some example embodiments have been described, those skilled in the art will readily appreciate that many modifications are possible in the example embodiments without materially departing from the novel teachings and advantages of the example embodiments. Accordingly, all such modifications are intended to be included within the scope of the example embodiments as defined in the claims. Therefore, it is to be understood that the foregoing is illustrative of various example embodiments and is not to be construed as limited to the specific example embodiments disclosed, and that modifications to the disclosed example embodiments, as well as other example embodiments, are intended to be included within the scope of the appended claims and their equivalents.

## Claims

1. A method of optimizing a neural network model, the method comprising:
receiving first model information about a first neural network model;
receiving device information about a first target device that is used to execute the first neural network model;
performing an analysis whether the first neural network model is suitable for executing on the first target device, based on the first model information, the device information, and at least one of a plurality of suitability determination algorithms; and
outputting a result of the analysis such that the first model information and the result of the analysis are displayed on a screen.

2. The method of claim 1, wherein the plurality of suitability determination algorithms include a first algorithm that is used to determine a performance efficiency of a structure and layers of the first neural network model associated with the first target device.

3. The method of claim 2, wherein the performing the analysis includes:
performing a first analysis on the first neural network model based on the first algorithm.

4. The method of claim 3, wherein performing the first analysis includes:
obtaining first scores of the structure and the layers of the first neural network model using a pre-listed table for the first target device;
obtaining second scores of the structure and the layers of the first neural network model by predicting a processing time of the structure and the layers of the first neural network model using a performance estimator;
obtaining third scores of the structure and the layers of the first neural network model using a pre-trained deep learning model for the first target device; and
obtaining performance scores of the structure and the layers of the first neural network model based on the first scores, the second scores, and the third scores.

5. The method of claim 1, wherein the plurality of suitability determination algorithms include a second algorithm that is used to analyze a complexity and a capacity of a structure and layers of the first neural network model.

6. The method of claim 5, wherein performing the analysis includes:
performing a second analysis on the first neural network model based on the second algorithm.

7. The method of claim 6, wherein performing the second analysis includes:
obtaining fourth scores of the structure and the layers of the first neural network model by determining the complexity of the structure and the layers of the first neural network model;
obtaining fifth scores of the structure and the layers of the first neural network model by measuring the capacity of the structure and the layers of the first neural network model; and
obtaining complexity scores of the structure and the layers of the first neural network model based on the fourth scores and the fifth scores.

8. The method of claim 1, wherein the plurality of suitability determination algorithms include a third algorithm that is used to determine a memory efficiency of a structure and layers of the first neural network model associated with the first target device.

9. The method of claim 8, wherein performing the analysis includes:
performing a third analysis on the first neural network model based on the third algorithm.

10. The method of claim 9, wherein performing the third analysis includes:
obtaining memory footprint scores of the structure and the layers of the first neural network model based on a memory limitation of the first target device.

11. The method of claim 10, further comprising:
changing the first neural network model based on the first neural network model being unavailable within the memory limitation.

12. The method of claim 1, wherein performing the analysis includes:
obtaining performance scores of a structure and layers of the first neural network model associated with the first target device, by performing a first analysis on the first neural network model based on a first algorithm;
obtaining complexity scores of the structure and the layers of the first neural network model, by performing a second analysis on the first neural network model based on a second algorithm;
obtaining memory footprint scores of the structure and the layers of the first neural network model associated with the first target device, by performing a third analysis on the first neural network model based on a third algorithm; and
obtaining total scores of the structure and the layers of the first neural network model based on the performance scores, the complexity scores, and the memory footprint scores.

13. The method of claim 1, further comprising:
changing at least one of layers of the first neural network model based on the result of the analysis.

14. The method of claim 1, further comprising:
applying different quantization schemes to at least some of layers of the first neural network model.

15. A computer-based neural network model processing system, comprising:
an input device configured to receive first model information about a first neural network model and device information about a first target device that is used to execute the first neural network model;
a storage device configured to store information about program routines;
a processor configured to read and execute the program routines, which cause the processor to:
perform an analysis whether the first neural network model is suitable for executing on the first target device, based on the first model information, the device information, and at least one of a plurality of suitability determination algorithms; and
generate a result of the analysis; and
an output device configured to visually output the result of the analysis.
